# EUROPÄISCHE PATENTSCHRIFT

(11) **EP 3 523 057 B1**
(45) Veröffentlichungstag und Bekanntmachung des Hinweises auf die Patenterteilung: **07.06.2023**
(21) Anmeldenummer: 17780412.7
(22) Anmeldetag: 06.10.2017
(51) Int. Cl.: B08B 17/00, B05B 9/04

(54) **VORRICHTUNG UND VERFAHREN ZUM BINDEN VON STAUB**
DEVICE AND METHOD FOR BINDING DUST
DISPOSITIF ET PROCÉDÉ POUR AGGLOMÉRER LA POUSSIÈRE

(30) Priorität: 06.10.2016 AT 509032016; 06.10.2016 DE 202016105569 U; 06.10.2016 DE 202016105570 U; 06.10.2016 DE 202016105572 U
(43) Veröffentlichungstag der Anmeldung: 14.08.2019
(60) Teilanmeldung: 22158090.5
(73) Patentinhaber: Widhalm, Stefan, 5023 Salzburg (AT)
(72) Erfinder: Widhalm, Stefan, 5023 Salzburg (AT)
(74) Vertreter: KLIMENT & HENHAPEL
(86) Internationale Anmeldenummer: PCT/EP2017/075501
(87) Internationale Veröffentlichungsnummer: WO 2018/065586

(56) Entgegenhaltungen:
- EP-A1- 1 084 607
- WO-A1-2008/013444
- WO-A1-2014/161023
- WO-A2-2011/095463
- AT-A1- 512 490
- CN-U- 203 700 087
- DE-A1- 3 942 496
- US-A1- 2007 125 558
- US-A1- 2008 283 623
- US-A1- 2013 017 336

## Beschreibung

Die vorliegende Erfindung betrifft eine Vorrichtung und ein Verfahren zum Binden von Staub. Aus der DE 297 18 708 U1 bzw. EP 0 908 215 A2 geht eine Vorrichtung zur Bindung bzw. der Niederschlagung von Staub hervor. Diese Vorrichtung ist ähnlich wie eine Schneekanone mit einer Luftdüse, in welcher Luft mittels eines Propellers bzw. einer Laufschaufel beschleunigt wird, ausgebildet. In einem hierdurch gebildeten Luftstrahl wird Flüssigkeit durch eine oder mehrere Düsen eingesprüht. Die Flüssigkeit wird somit in fein verteilter Form von dem Luftstahl transportiert. Mit dieser Vorrichtung können große Mengen von Wasser über einen großen Bereich verteilt werden.

In der DE 1 658 345 U ist eine Düse zur Zerstäubung von Wasser oder eines Wasser-Luft-Gemisches zur Niederschlagung von Staub im untertägigen Bergbau beschrieben. Die Düse ist selbstreinigend ausgebildet, indem ein Teil, das den Austrittsquerschnitt der Düse bestimmt, mittels einer Federkraft beaufschlagt ist. Bei einer Verschmutzung der Düse entsteht ein Überdruck, der die Federkraft überwindet. Hierdurch wird die Düsenöffnung vergrößert und es erfolgt eine Selbstreinigung der Düse.

In dem deutschen Gebrauchsmuster DE 1 668 644 U ist eine Vorrichtung zum Niederschlagen von Staub aus Gasen offenbart, bei welcher Dampf aus feinen Teilchen verwendet wird, um die Staubteilchen einzuhüllen.

In der WO 2014/019311 A1 ist eine weitere Düse zum Sprühen von Wasser offenbart, um bei Bergbaumaschinen Staub zu entfernen und diese zu kühlen. Das Wasser wird mittels eines Luftstromes möglichst fein verteilt.

In der DE 915 203 B ist ein weiteres Verfahren und eine weitere Einrichtung zum Niederschlagen von Staub beschrieben. Am Rohrsystem sind Düsen vorgesehen, an welchen jeweils ein Teilstrom eines Gemisches aus Luft und Flüssigkeit abgezweigt wird. Mit jeder Abzweigung wird das Mischungsverhältnis zwischen Luft und Flüssigkeit verändert. Dies wird gezielt dazu genutzt, entlang des Rohrsystems das austretende Mischungsverhältnis von Nebel in Sprühregen zu variieren.

In der EP 0 950 796 A1 ist eine Sprühnebelanlage zum Niederschlagen von Staub beschrieben, bei welcher an einer oder mehreren Mischdüsen ein Luftstrahl mit Wasser gemischt wird. Die Mischdüsen sind möglichst nahe an den Staubentstehungsstellen angeordnet.

In der DE 23 35 861 A1 ist eine Vorrichtung zum Einbringen von leicht staubendem Schüttgut in ein Rundsilo beschrieben. Das Schüttgut wird beim Zuführen in das Silo mittels eines Staubbindemittels benetzt, indem es mit dem Staubbindemittel besprüht wird. Das Staubbindemittel ist Wasser mit einem Zusatz eines Wasseroberflächenentspannenden Stoffes.

Aus der DE 6 812 095 U geht eine weitere Vorrichtung zum Niederschlagen von Staub hervor, bei welcher das staubende Gut direkt mit Wasser besprüht wird.

Die DE 1 815 543 betrifft eine Einrichtung zum Niederschlagen von Staub bei der schneidenden und der schälenden Kohlengewinnung. Hierbei soll stets der unmittelbare Ort der Staubentstehung und dessen nähere Umgebung mit einem Wasserschleier abgedeckt werden. Eine Gewinnungsmaschine befindet sich stets im Bereich einer Düsengruppe, von welcher sie mit einem Wasserschleier abgedeckt wird.

Aus der DE 41 31 75 A1 geht ein Hobelgassenbedüsungssystem hervor, bei dem eine Hobelgasse mit mehreren Düsen besprüht werden kann. Dieses Bedüsungssystem zeichnet sich dadurch aus, dass die einem Ausbaugestell zugeordneten Düsen über ein eigenes Schaltventil einspeisbar sind und mehrere Sprühzonen veränderlicher Größe gebildet werden können. Hierdurch soll eine optimale Anpassung der Sprühzone an die jeweiligen Bedingungen bei einer Reduzierung des Wasserverbrauchs erzielt werden, da immer nur so viel Düsen eingeschaltet bzw. eingespeist sind, wie für eine größtmögliche Staubbindung erforderlich ist.

Aus der DE 1 795 744 U geht eine Vorrichtung zum Niederschlagen des in der Luft schwebenden Staubes hervor, welche einen Wascher aufweist, mit welchem die den Staub enthaltende Luft eingesaugt wird und innerhalb des Waschers mit Wasser besprüht wird, so dass der Staub gebunden wird.

In der AT 512 490 A1 ist eine Hochdrucknebelanlage beschrieben, die unter anderem zum Binden von Staub verwendet werden kann. Mit dieser Hochdrucknebelanlage soll schwebefähiger Wassernebel erzeugt werden. Wasser, insbesondere Trinkwasser, wird mit einem Druck von etwa 70 - 100 bar Vernebelungsöffnungen zugeführt, an welchen das Wasser versprüht wird. Mittels schaltbarer Ventile können mehrere Zonen vorgesehen werden, welche unabhängig mit Nebel beaufschlagt werden.

Aus der DE 34 41 386 A1 geht ein Verfahren zum Niederschlagen von Staub hervor, bei welchem eine Schaumkanone verwendet wird, mit welcher Schaum zum Binden des Staubes bereitgestellt wird.

Aus der WO 2008/082316 A2 und der WO 2008/020773 A1 gehen jeweils Sprühdüsen hervor, mit welchen Wasser zerstäubt wird. Diese Sprühdüsen sind vor allem für unterschiedliche Zwecke im Bergbau vorgesehen. Unter anderem sollen Staubbedingungen kontrolliert werden.

In der WO 2011/095463 A2 ist eine Sprühdüseneinheit, insbesondere zur Bedüsung von explosionsgefährdeten Bereichen im untertägigen Bergbau und zum Einsatz in Ultra Highspeed Fire Suppression Systems bei Ansprechzeiten unter 50 ms offenbart. Diese Sprühdüseneinheit umfasst einen Düsenkörper, der eine Düsenöffnung zum Ausdüsen von Sprühflüssigkeit aufweist.

Aus der US 2007/0125558 A1 geht eine Vorrichtung zum Binden von Staub hervor. Diese Vorrichtung umfasst einen Vorratsbehälter für Bindemittel, wobei mittels eines optischen Sensors Pumpen angesteuert werden, um Bindemittel aus dem Bindemittelvorratsbehälter zu fördern und entsprechend abzugeben. Hierbei ist insbesondere vorgesehen, mittels der Pumpe bzw. der Pumpen Bindemittel aus dem Vorratsbehälter abzupumpen und über die entsprechenden Düsen abzugeben.

In der WO 2014/161023 A1 ist eine Staubbindevorrichtung für Container offenbart. Gemäß dieser Vorrichtung ist vorgesehen, aus einem externen Vorratsbehälter Bindemittel zu fördern und dieses über ein entsprechendes Leitungssystem mittels Pumpen in einen Container oberhalb eines staubenden Mediums abzugeben, um auf diese Weise den Staub zu binden.

In der DE 20 2015 104 984 U1 ist eine Vorrichtung zum Entfernen von Schwebestaub, insbesondere Feinstaub, aus der Umgebungsluft einer Verkehrsinfrastruktur offenbart. Diese Vorrichtung umfasst z. B. eine Sprüheinrichtung mit einer Druckerzeugungseinrichtung zum Bereitstellen einer Druckdifferenz. Die Sprüheinrichtung drückt oder saugt flüssiges Lösungsmittel aus einem Zwischenbehälter, der über eine nicht dargestellte Versorgungsleitung gespeist wird. Dabei ist vorgesehen, mittels der Sprüheinrichtungen das flüssige Lösungsmittel vom Boden, auf dessen Höhe in etwa ein jeweiliger Zwischenbehälter angeordnet ist, in eine längliche Sprühleitung zu fördern. Entlang der Länge der Sprühleitung sind Düsen angeordnet. Aus diesen Düsen wird das flüssige Lösungsmittel in Tropfenform in die Umgebungsluft gesprüht.

Aus der DE 75 35 462 U geht ein Steuergerät für die Schaltbetätigung von Sprühdüsen zum Niederschlagen von Staub in Bergbau-Gewinnungsbetrieben hervor. Dabei sind Sprühdüsen vorgesehen, die z. B. mittels eines Hebels einzeln oder in Gruppen mittels entsprechender Schaltventile ein- und ausschaltbar sind. Hierbei kann ein Steuergerät verwendet werden, um die Schaltventile mittels entsprechender Schaltorgane fernzusteuern. Die Sprühdüsen sollen derart gesteuert werden, dass der Staub unabhängig von der jeweiligen Fahrgeschwindigkeit einer Gewinnungsmaschine unmittelbar am Entstehungsort, d. h. im Arbeitsbereich der Gewinnungsmaschine, wirksam niedergeschlagen wird.

In der DE 18 15 543 A ist eine Einrichtung zum Niederschlagen von Staub offenbart. Dabei ist vorgesehen, eine Vielzahl von Düsen in gemeinsam betätigbaren Gruppen derart zusammenzufassen, dass sich die jeweiligen Gruppenbereiche überschneiden, um jeweils die Düsengruppe zu betreiben, innerhalb der sich das Gewinnungsgerät befindet, um den vom Gewinnungsgerät erzeugten Staub niederzuschlagen.

Aus der US 2,722,456 A geht eine Sprühvorrichtung hervor. Diese Sprühvorrichtung umfasst einen Vorratsbehälter. An den Vorratsbehälter ist über eine Leitung eine Pumpe angeschlossen, um ein Sprühmedium aus dem Vorratsbehälter zu fördern. Die Pumpe kann als Zahnradpumpe ausgebildet sein. Weiterhin ist an die Pumpe eine Leitung angeschlossen, an der mehrere Düsen zum Abgeben des Sprühmediums angeordnet sind. Weiterhin ist ein Ventil vorgesehen, um das Ausgeben des Sprühmediums zu steuern. Mittels eines weiteren Ventils kann der Volumenstrom des aus dem Vorratsbehälter geförderten Sprühmediums eingestellt werden. Zudem ist in der Anmeldung beschrieben, dass das Sprühmedium 14 mittels eines von der Pumpe erzeugten Drucks zu den Düsen gefördert wird. Die Pumpe ist als Zahnradpumpe ausgebildet. Weiterhin zweigt von der Leitung eine weitere Leitung in den Vorratsbehälter ab, an die entsprechende Düsen angeschlossen sind, um das Sprühmedium zu agitieren, zu vermischen und zu verrühren.

In der EP 1 084 607 A1 ist eine verfahrbare Speichervorrichtung offenbart. Diese Speichervorrichtung umfasst einen Druckbehälter, der Mittel zur Ausübung von Druckkräften auf im Druckbehälter vorgehaltenes Wasser aufweist. Die Mittel zur Ausübung von Druckkräften können dabei im Druckbehälter selbst oder am Druckbehälter, bspw. durch einen Druck-Ausgleichsbehälter, ausgebildet sein. Gemäß einem Ausführungsbeispiel weist der Druckbehälter eine verformbare Membran auf, die den Druckbehälter in eine untere Kammer und eine obere Kammer unterteilt. Die untere Kammer ist über eine Leitung mit Wasser befüllbar und verkleinert dann die obere Kammer, in der eine Schraubenfeder zur Druckbeaufschlagung der Membran angeordnet ist. Anstelle der Schraubenfeder kann ein Inertgas wie Stickstoff oder Kohlendioxid als kompressibles Druckmedium in der Kammer vorgehalten sein. Dort wird eine Abgabearmatur auf den zu wässernden Bereich gerichtet und geöffnet. Zur Abgabe ist vorzugsweise eine Sprühdüse mit vorgeschaltetem Betätigungsventil 32 vorgesehen.

In der DE 000P0047416MAZ ist eine Beregnungsanlage mit selbsttätig wirkender Abstellvorrichtung offenbart. Diese Beregnungsanlage ist z. B. ausgebildet, um drei verschiedene Beregnungsfelder I, II und III zu beregnen.

In der DE 75 35 462 U ist ein Steuergerät für die Schaltbetätigung von Sprühdüsen zum Niederschlagen des Staubes in Bergbaugewinnungsbetrieben offenbart, um ein Gewinnungsfeld zu bedüsen.

In der DD 2 58 837 A1 sind ein Verfahren und eine Anordnung zum Erzeugen großflächiger Staubsperren offenbart.

In der US 479 979 A ist eine Sprühvorrichtung offenbart.

In der DE 18 33 442 U ist eine "ambulant" verlegbare Anordnung zum Beregnen landwirtschaftlicher Nutzflächen offenbart.

Aus der DE 380 896 A geht eine Beregnungsanlage mit von einer Feldleitung abgehenden Zweigleitungen hervor.

In der DE 19 28 789 C ist eine Anlage zum Sprengen von Wasser oder Düngemittel in Gewächshäusern offenbart.

In der US 2014/0239080 A1 ist eine ortsfest installierte Beregnungsanlage offenbart.

In der US 2008/0283623 A1 ist eine Vorrichtung mit einer Leitung an welcher eine Zerstäubungsdüse angeschlossen ist, wobei die Leitung an einem Tragseil aufgehängt ist, offenbart.

Aus Technische Strömungslehre, Leopold Böswirth, Lehr- und Übungsbuch, 8. Auflage, Vieweg+Teubner, Kapitel 12.3 ist es bekannt, dass bei langen, flüssigkeitsdurchströmten Rohrleitungen der Druck an einem Schieber, der geöffnet oder geschlossen wird, schlagartig stark ansteigen bzw. stark abfallen kann. Es kann sogar zu Dampfbildung auf der Abströmseite kommen. Druckstöße werden im Leitungssystem reflektiert und führen zu Druckschwingungen. Derartige Druckstöße können die Lebensdauer von Vorrichtungen mit flüssigkeitsführenden Leitungen erheblich beeinträchtigen.

Zusammenfassend kann festgehalten werden, dass zum Binden von Staub
1. oftmals ein Luft/Wasser-Gemisch verwendet wird, um das Wasser zu zerstäuben und großflächig zu verteilen,
2. möglichst unmittelbar an der staubentstehenden Stelle ein Nebel oder Sprühregel vorgesehen wird, um den Staub zu binden, und
3. unterschiedlichste Staubbindemittel, wie Sprühregen, Nebel, Schaum mit und ohne chemische Zusätze verwendet werden.

Eine Aufgabe der vorliegenden Erfindung liegt darin, eine Vorrichtung und ein Verfahren zum Binden von Staub zu schaffen, mit welchen Staub sehr effizient gebunden werden kann.

Eine weitere Aufgabe der vorliegenden Erfindung liegt darin, eine Vorrichtung und ein Verfahren zum Binden von Staub zu schaffen, mit welchen Staub mit möglichst wenig Staubbindemittel zuverlässig gebunden werden kann.

Eine weitere Aufgabe der vorliegenden Erfindung liegt darin, eine Vorrichtung und ein Verfahren zum Binden von Staub zu schaffen, wobei die Vorrichtung bzw. die bei diesem Verfahren verwendete Vorrichtung einem geringen Verschleiß unterliegt.

Eine weitere Aufgabe der vorliegenden Erfindung ist es, eine Vorrichtung und ein Verfahren zum Binden von Staub zu schaffen, mit welchen entlang bzw. innerhalb einer großen Strecke bzw. großen Fläche, wie zum Beispiel eines Straßenabschnittes oder einer Kiesgrube, der Austritt von Staub zuverlässig verhindert bzw. erheblich reduziert werden kann.

Eine weitere Aufgabe der vorliegenden Erfindung ist es, eine Vorrichtung und ein Verfahren zum Binden von Staub zu schaffen, welche an Maschinen und Fahrzeuge verschiedenster Art, wie z.B. Steinbrechern, Gleisbaumaschinen, Asphaltfräsen, Reinigungsfahrzeugen, usw. angebaut bzw. integriert werden können, womit auch ein mobiler Betrieb möglich ist.

Eine oder mehrere der vorliegenden Aufgaben werden durch die in den unabhängigen Ansprüchen angegebenen Gegenstände gelöst. Vorteilhafte Ausgestaltungen sind in den jeweiligen Unteransprüchen angegeben.

Das Binden von Staub kann grundsätzlich durch einen künstlichen Nebel oder durch einen Sprühregen erfolgen. Bei einem künstlichem Nebel wird in der Luft ein sich langsam zum Boden absetzender Nebel erzeugt, wobei durch die Nebeltröpfchen der Staub aus der Luft gewaschen wird. Mit dem Sprühregen wird der Boden mit Binde-mittel benetzt, so dass die Entstehung von Staub verhindert wird. Die Nebelbildung und der Sprühregen unterscheiden sich im Wesentlichen durch die Tröpfchengröße, wobei der Übergang fließend ist. Die Erzeugung eines Nebels führt auch zu einer Benetzung des Bodens und die Erzeugung eines Sprühregens führt auch zum Auswaschen von Staub aus der Luft. Jedoch liegt bei einem künstlichen Nebel der Schwerpunkt der Wirkung in dem Auswaschen von Staub aus Luft und bei einem Sprühregen in der Benetzung des Bodens. Künstlicher Nebel umfasst Tröpfchen mit einer Größe kleiner als 200 µm, insbesondere kleiner als 150 µm oder kleiner als 100 µm. Sprühregen umfasst Tröpfchen mit einer Größe von zumindest 100 µm, insbesondere zumindest 150 µm und vorzugsweise zumindest 200 µm.

Bei Vorrichtungen, bei welchen Boden mit Sprühregen benetzt wird, werden vorzugsweise nicht mehr als 6 l/m²/h und vorzugsweise nicht mehr als 4 l/m²/h und insbesondere nicht mehr als 3 l/m²/h Bindemittel ausgetragen. Hierdurch wird sichergestellt, dass keine Pfützen entstehen. Bei versiegeltem Boden ist die ausgetragene Menge geringer einzustellen als bei nicht versiegeltem Boden. Die auszutragende Menge an Bindemittel sollte zumindest 0,75 l/m²/h und vorzugsweise zumindest 1l/m²/h oder insbesondere zumindest 1,2 l/m²/h betragen, um eine ausreichende Benetzung des Bodens sicherzustellen. Diese Werte für die Austragung des Bindemittels gelten für den Dauerbetrieb. Beim Intervallbetrieb sind die ausgetragenen Mengen durch die Pausenzeiten entsprechend verringert.

Die nachfolgend erläuterten Vorrichtungen zum Leiten und Lenken von Bindemittelströmen können sowohl zur Erzeugung von Nebel als auch von Sprühregen verwendet werden, sofern nicht ausdrücklich etwas anderes ausgeführt ist.

Nach einem ersten Aspekt der vorliegenden Erfindung wird eine Vorrichtung zum Binden von Staub vorgesehen, umfassend
ein Bindemittelreservoir, welches unter Druck stehendes flüssiges Bindemittel zur Verfügung stellt,
eine Bindemittelleitung, welche mit dem Bindemittelreservoir verbunden ist, wobei an die Bindemittelleitung zumindest eine Zerstäubungsdüse angeschlossen ist, welche in der Nähe zu einer Staubquelle anordbar ist.

Die Zerstäubungsdüse ist in der Nähe zur Staubquelle angeordnet, wobei sie vorzugsweise so ausgebildet und angeordnet ist, dass nicht die Staubquelle mit dem Bindemittel besprüht wird, sondern in einem vorbestimmten Abstand zur Staubquelle ein Bindemittelnebel ausgebildet ist. Dieser Anordnung liegt die Erkenntnis zugrunde, dass an einer Staubquelle Staub aufgewirbelt wird, womit eine Staubquelle meistens mit einem turbulenten Luftstrom verbunden ist. Würde man in einem solchen turbulenten Luftstrom Staub mittels eines Bindemittels binden, dann ist der Bindemittelbedarf beträchtlich. Bindet man hingegen den Staub an von der Staubquelle entfernten Orten, an welchen sich die Luftströmung beruhigt hat, dann verweilt der Staub länger in der Luft, wodurch mit wesentlich weniger Nebeltröpfchen der Staub zuverlässig gebunden werden kann, als am Ort der Staubquelle selbst. Selbst wenn man eine lokale Staubquelle mit Abstand mit einer künstlichen Nebelwand umgibt, ist der Bindemittelbedarf wesentlich geringer, als wenn man die Staubquelle direkt mit dem Bindemittel besprüht, obwohl der Bereich, in dem der Nebel künstlich erzeugt wird, in der Regel wesentlich größer als die Staubquelle ist, da er mit einem vorbestimmten Abstand die Staubquelle umschließt.

Der Abstand ist so zu wählen, dass im Bereich des Nebels sich die den Staub enthaltende Luftströmung soweit beruhigt hat, dass der Nebel sich allmählich zum Boden absenken kann und nicht unkontrolliert wegbewegt wird. Üblicherweise ist ein Abstand von einigen 10 cm, vorzugsweise zumindest 50 cm oder zumindest 1 m bzw. zumindest 2 m einzuhalten. Bei der Wahl des geeigneten Abstandes sind auch Fremdluftströmungen zu berücksichtigen, welche durch Bewegungen von Gütern, Fahrzeugen, Wind oder Thermik erzeugt werden können. Insbesondere in Hallen tritt oftmals Thermik auf. Es kann auch zweckmäßig sein, ein oder mehrere Leitbleche vorzusehen, mit welchen eine mit Staub verunreinigte Luftströmung so geleitet wird, dass sie sich beruhigt und ein künstlicher Nebel effizient den Staub entfernen kann.

Der Abstand zur Staubquelle ist vorzugsweise so zu wählen, dass sich der Nebel vor allem in einem Bereich befindet, in dem die Luftströmung nicht größer als 1 m/s insbesondere nicht größer als 0,8 m/s beziehungsweise nicht größer als 0,7 m/s und vorzugsweise nicht größer als 0,5 m/s ist. Es hat sich gezeigt, dass bei Luftströmung von mehr als 1 m/s der Staub nicht effizient mit einem Nebel gebunden werden kann bzw. die zum effizienten Staubbinden notwendigen Wassermengen exponentiell ansteigen. Die Luftströmungen können im Ort und in der Zeit variieren. Beim Abladen von großen Steinen kann beispielsweise kurzzeitig eine sehr starke Luftströmung auftreten, wobei in den Pausen zwischen den einzelnen Abladevorgängen die Luftströmung wesentlich schwächer ist. Kurzzeitige Überschreitungen der Grenzwerte für die maximale Luftströmung beeinträchtigen die Staubbindungseffizienz nur unwesentlich. Leitbleche können vorgesehen werden, um Fremdluftströmungen vom Nebelbereich abzuhalten, um so die oben erläuterten Grenzwerte der Luftströmung im Bereich des Nebels einhalten zu können.

Das Bindemittel ist ein flüssiges Bindemittel, vorzugsweise Wasser. Im Stand der Technik wird oftmals ein Luft/Wasser-Gemisch verwendet. Ein solches Luft/WasserGemisch ist jedoch nachteilig, da es durch den Luftanteil eine hohe inhärente Luftströmung erzeugt, welche nicht zur Erzeugung eines schwebenden Nebels geeignet ist. Zur Erzeugung eines Sprühregens kann ein Luft/Wasser-Gemisch verwendet werden, wobei jedoch Wasser, das ohne Luft durch eine Zerstäubungsdüse getrieben wird, bevorzugt wird.

Das Bindemittel wird im Bindemittelreservoir mit einem Druck von vorzugsweise maximal 10 bar, insbesondere vorzugsweise maximal 7 bar und insbesondere nicht mehr als 5 bar zu Verfügung gestellt. Je geringer der Druck ist, desto einfacher ist es, eine Vorrichtung mit einer langen Bindemittelleitung auszubilden, welche die großflächige Abdeckung mit Sprühnebel erlaubt. Bei höherem Druck besteht die Gefahr, dass einzelne Komponenten auf Dauer der Belastung nicht widerstehen und die gesamte Regelung und Steuerung des Druckes in der Bindemittelleitung wird wesentlich aufwändiger und komplizierter.

Das Bindemittelreservoir sollte das Bindemittel mit einem Druck von zumindest 2 bar, vorzugsweise zumindest 3 bar und insbesondere vorzugsweise zumindest 4 bar zur Verfügung stellen. Je höher der Druck am Bindemittelreservoir ist, desto größer können die Druckverluste in der Bindemittelleitung sein, und dennoch an der bzw. den Zerstäubungsdüsen ein zur Zerstäubung ausreichender Druck vorgesehen werden. Dies bedeutet auch, dass je größer der Druck am Bindemittelreservoir ist, desto länger kann die Bindemittelleitung sein, ohne dass eine zusätzliche Druckstufe in Form einer Pumpe nötig ist. Das Bindemittelreservoir kann ein Brunnen, ein Tank mit und ohne Förderpumpe oder ein Anschluss einer Wasserleitung sein, welche das Binde-mittel Wasser mit einem vorbestimmten Druck zur Verfügung stellt.

Der Druck, mit welchem das Bindemittelreservoir oder eine Bindemittelquelle zur Verfügung gestellt wird, wird vorzugsweise mit einer Pumpe eingestellt. Der Druck kann aber auch z.B. durch eine vorhandene Wasserversorgung oder einen Hochbehälter, der durch einen passenden geodätischen Höhenunterschied einen ausreichenden Druck zur Verfügung stellt, vorgegeben sein, so dass keine extra Pumpe nötig ist, welche das Bindemittel aus dem Bindemittelreservoir abfördert.

Die Begrenzung des Druckes auf einen maximalen Wert im Bereich von 5 bis 10 bar hat auch den Vorteil, dass die Bindemittelleitung aus einem elastischen Rohr ausgebildet sein kann, wie zum Beispiel einem Kunststoffrohr, insbesondere PE-Rohr. Solche elastischen Rohre haben erhebliche Vorteile, da sie einerseits Druck puffern können, Anschlussstellen für Zerstäubungsdüsen an beliebigen Stellen gestanzt werden können und zudem sehr schnell und einfach verlegt werden können.

Ein weiterer Vorteil durch die Begrenzung des Druckes liegt darin, dass keine Hochdruckpumpen notwendig sind, welche bei schmutziger Luft anfällig sind. Hochdruckpumpen sind Pumpen, welchen einen dauerhaften Betriebsdruck von 20 bar oder mehr erzeugen.

Die Zerstäubungsdüse bzw. die Zerstäubungsdüsen sind derart ausgebildet, dass das Bindemittel mit einer Tröpfchengröße von 30 bis 120 µm und vorzugsweise mit 50 bis 150 µm und insbesondere mit einer Tröpfchengröße von 60 bis 90 µm zerstäubt wird. Eine solche Tröpfchengröße bildet in ruhiger Luft einen schwebenden Nebel, der den Staub zuverlässig bindet und allmählich absinkt.

Gemäß einem zweiten Aspekt der vorliegenden Erfindung kann die Bindemittelleitung sich über eine Strecke von zumindest 100 m bzw. insbesondere von zumindest 300 m erstrecken, wobei entlang dieser Strecke mehrere Zerstäubungsdüsen an die Bindemittelleitung angeschlossen sind, und wobei die Vorrichtung derart ausgebildet ist, dass nicht mehr als 6 l/m²h Binde-mittel während eines Sprühvorganges auf dem Boden ausgetragen werden.

Die Menge an ausgesprühtem Bindemittel ist vorzugsweise so eingestellt, dass ein geringer Feuchtigkeitsüberschuss vorliegt, d.h., dass nicht das gesamte zerstäubte Bindemittel von der Luft aufgenommen werden kann, sondern flüssige Nebelpartikel in der Luft vorliegen. Solche Nebelpartikel senken sich ab und binden den in der Luft enthaltenen Staub und transportieren ihn zu Boden. Vorzugsweise ist die ausgegebene Wassermenge so groß, dass eine ausreichend starke Abwärtsbewegung stattfindet, um den Staub zügig nach unten zu transportieren. Ein gewisser Überschuss an Bindemittel verringert den Regelaufwand. Dennoch ist es möglich, bei einer solchen Tröpfchengröße die Menge des ausgesprühten Bindemittels so einzustellen, dass zum einen ein stabiler schwebender Nebel vorgesehen wird, der zuverlässig den Staub bindet, und andererseits die Bindemittelmenge so gering ist, dass am Boden keine Pfützen entstehen. Die Vorrichtungen zum Erzeugen eines künstlichen Nebels sind vorzugsweise derart ausgebildet, dass pro Düse etwa 5 bis 30 Liter Bindemittel pro Stunde abgegeben werden, wobei das Bindemittel sich auf einen Bereich von 0,8 m bis 1,5 m um die Düse verteilt. Die zumindest eine Zerstäubungsdüse ist vorzugsweise eine Druckdüse, welche mit einem selbsttätig sperrenden bzw. öffnenden Drucksteuerventil ausgebildet ist und deshalb ab einem bestimmten Öffnungsdruck des zugeführten Bindemittels selbstständig öffnet und die Vorrichtung eine Drucksteuerung aufweist, mit welcher der Druck in der Bindemittelleitung steuerbar ist. Hierdurch ist es möglich, über die Drucksteuerung zu steuern, ob die eine oder die mehreren Zerstäubungsdüsen Bindemittel abgeben oder nicht.

Insbesondere ist gemäß dem ersten Aspekt vorgesehen, dass die Bindemittelleitung ein oder mehrere Drucksteuerventile aufweisen kann, welche als Druckschaltventile ab einem vorbestimmten Schaltdruck öffnen und somit eine Bindemittelzufuhr an die Zerstäubungsdüse(n) freigeben oder als Druckregelventile auch ab einem vorbestimmten Schaltdruck öffnen und zugleich einen Druck auf der Abströmseite des Druckregelventils auf einen vorbestimmten Druckbereich regeln. Die Vorteile entsprechender Druckdüsen oder entsprechender Drucksteuerventile, welche als Druckschaltventile ab einem vorbestimmten Schaltdruck öffnen und somit eine Bindemittelzufuhr an die Zerstäubungsdüse(n) freigeben oder als Druckregelventile auch ab einem vorbestimmten Schaltdruck öffnen und zugleich einen Druck auf der Abströmseite des Druckregelventils auf einen vorbestimmten Druckbereich regeln, sind nachfolgend aufgezeigt und werden auch anhand eines entsprechenden Ausführungsbeispiels detaillier erläutert.

Die Druckdüsen bzw. die Drucksteuerventile können beispielsweise mit einem Öffnungsdruck von 2 bar, 3 bar oder 4 bar ausgebildet sein. Der Schließdruck ist vorzugsweise etwas geringer als der Öffnungsdruck. Bei einem Öffnungsdruck von 2 bar beträgt der Schließdruck beispielsweise 0,9 bar, bei einem Öffnungsdruck von 3 bar beispielsweise 1,5 bar und bei einem Öffnungsdruck von 4 bar beispielsweise 1,8 bar. Hierdurch wird sichergestellt, dass durch den nach dem Öffnen der jeweiligen Düse erzeugten Druckabfall die Druckdüse nicht sofort wieder schließt, sondern bei einem geringen Druck weiter offen gehalten werden kann.

Solche Druckdüsen bzw. Drucksteuerventile erlauben eine einfache zentrale Steuerung über den Bindemitteldruck, denn die Drucksteuerventile öffnen und schließen vollständig wenn der Druck in der Bindemittelleitung entsprechend gesteuert wird. Zudem verhindern solche selbständig schießenden Druckdüsen bzw. Drucksteuerventile ein Entleeren der Bindemittelleitung, da sie bei einem Druckabfall unter den Schaltdruck selbstständig schließen. Hierdurch fällt der Druck in der Bindemittelleitung nicht oder eventuell nur sehr langsam ab, so dass beim intervallmäßigen Pulsen kein oder nur ein sehr geringer Druck in der Bindemittelleitung aufgebaut werden muss. Diese Druckdüsen fungieren deshalb auch als Auslaufstopp. Dies bewirkt folgende Vorteile:
- Die Bindemittelleitung muss nicht gefüllt werden, bevor erneut Wasser über die Zerstäubungsdüsen abgegeben wird. Zwischen den einzelnen Pulsen muss allenfalls Bindemittel mit geringer Menge nachgefüllt werden, wobei durch das druckbeaufschlagte Bindemittelreservoir dieses Bindemittel schlagartig zur Verfügung steht und bereits unter Druck steht. Hierdurch wird eine schnelle Pulsung mit geringster Austragungsmenge ermöglicht.
- Druckbeaufschlagtes Wasser liegt somit immer unmittelbar an den Zerstäubungsdüsen bzw. den hierum benachbarten Druckdüsen bzw. Drucksteuerventilen an.
- Ein Wiederbefüllen der Bindemittelleitung unterliegt der Gefahr von Druckschlägen und Kavitation in den Leitungen und den Düsen und anderen Komponenten wie Pumpen, Ventilen, etc. Zudem besteht die Gefahr von Einsaugen von unsauberer Umgebungsluft bzw. schmutzigem Drainagewasser oder anderem Schmutz. Diese Gefahr wird vermieden oder zumindest verringert.

Die Druckdüsen können mit einem Druckventil integral ausgebildet sein, das einen vorbestimmten Öffnungs- und einen vorbestimmten Schließdruck aufweist. Die Druckdüsen können jedoch auch aus einer Düse und einem separaten, vorgeschalteten Druckventil ausgebildet sein.

Die Druckdüsen weisen vorzugsweise eine Membran auf, die von einem mit einer Feder vorgespannten Kolben beaufschlagt wird, sodass ein Durchgang der Druckdüse erst ab dem vorbestimmten Öffnungsdruck geöffnet und bei Erreichen des Schließdruckes wieder geschlossen wird. Die Druckdüsen sind vorzugsweise so eingestellt, dass sie in der gesamten Staubbindevorrichtung oder in bestimmten Abschnitten, in welchen im Wesentlichen gleiche Zerstäubungsdüsen vorgegeben sind, einen Druck an den jeweiligen Zerstäubungsdüsen bereitstellen, der sich maximal um 20% und insbesondere maximal um 10% unterscheidet. Eine derart gleichmäßige Druckbeaufschlagung bewirkt eine gleichmäßige Ausgabe von Bindemittel, wobei sich hier die Gleichmäßigkeit sowohl auf die Geometrie des jeweiligen Sprühkegels der einzelnen Zerstäubungsdüsen als auch auf die abgegebene Bindemittelmenge bezieht. Es ist vor allem zweckmäßig, etwa den gleichen Druck an Abschnitten der Staubbindevorrichtung vorzusehen, an welchen die gleichen Düsen angeordnet sind. Selbstverständlich können unterschiedlich ausgebildete Abschnitte, wie zum Beispiel Abschnitte, bei welchen stehende Düsen zum Benetzen eines Bodens vorgesehen sind, mit einem anderen Druck als beispielsweise Abschnitte, bei welchen hängende Düsen zum Erzeugen eines Nebels vorgesehen sind, beaufschlagt werden und dementsprechend mit anders eingestellten beziehungsweise anders ausgebildeten Druckdüsen oder anders ausgebildeten Drucksteuerventilen versehen sein.

Eine unterschiedlich intensive Austragung von Bindemittel wird vorzugsweise durch den Abstand aufeinanderfolgender Zerstäubungsdüsen und nicht durch unterschiedliche Drücke eingestellt. Die Zerstäubungsdüsen sind vorzugsweise derart ausgebildet, dass sie das Bindemittel mit einem kreisförmigen oder halbkreisförmigen Wurfkegel abstrahlen. Der Abstand zweier aufeinanderfolgender Düsen beträgt vorzugsweise den Durchmesser D des Kreises des entsprechenden Wurfkegels abzüglich zumindest 20% (entspricht 0,8D) und insbesondere zumindest 34% (entspricht 0,66D) dieses Durchmessers. Hierdurch wird ein annähend streifenförmiger Bereich gleichmäßig mit Bindemittel versorgt, wobei die überlappenden Abschnitte benachbarter Wurfkegel begrenzt sind. Vorzugsweise liegt der Abstand benachbarter Düsen im Bereich des Durchmessers des Wurfkegels abzüglich zumindest 45% und vorzugsweise zumindest 50% des Durchmessers. Bei halbkreisförmigen Wurfkegeln werden die geringeren Abstände der Düsen mit zumindest 45% Abzug vom Durchmesser bevorzugt. Nebel erzeugende Staubbindevorrichtungen weisen in der Regel eine Düsenanordnung mit maximalen Abständen von 0,55D bzw. 0,5D auf.

Die Drucksteuerung weist vorzugsweise ein Steuerventil auf, das in der Bindemittelleitung im Bereich zwischen dem Bindemittelreservoir und der zumindest einen Druckdüse angeordnet ist, wobei das Steuerventil von einer Steuereinrichtung ansteuerbar ist. Hierdurch kann der zumindest einen Zerstäubungsdüse gezielt Binde-mittel mit einem vorbestimmten Druck zugeführt werden. Es können auch mehrere Steuerventile vorgesehen sein, welchen jeweils eine oder mehrere Zerstäubungsdüsen nachgeordnet sind, die dann jeweils mittels des jeweiligen Steuerventils mit Bindemittel mit einem vorbestimmten Druck beaufschlagt werden. Die Steuerventile können von der Steuereinrichtung hydraulisch, pneumatisch oder elektrisch oder mechanisch angesteuert werden.

Die zumindest eine Zerstäubungsdüse kann auch mit einem von einer Steuereinrichtung direkt ansteuerbaren Ventil versehen sein. Die Vorrichtung kann sowohl als Druckdüsen ausgebildete Zerstäubungsdüsen als auch mit einem direkt ansteuerbaren Ventil versehene Zerstäubungsdüsen umfassen. Solche direkt ansteuerbaren Ventile können von der Steuereinrichtung ferngesteuert geöffnet und geschlossen werden.

Das Bindemittelreservoir bzw. ein Druckreservoir kann einen Druckkessel mit Gaspolster umfassen. Ein solcher Druckkessel mit Gaspolster kann als Membrankessel ausgebildet sein, der eine Membran aufweist, welche den Membrankessel in einen Gasdruckraum und in einen Bindemittelraum unterteilt. Der Druckkessel kann auch ein Windkessel sein, in dem eine Gasblase angeordnet ist, welche unmittelbar mit dem Bindemittel in Kontakt steht. Da Gas komprimierbar ist, kann Bindemittel im Druckkessel mit Gaspolster aufgenommen werden, wobei das Gas im Gasdruckraum komprimiert wird, wodurch das Bindemittel mit zunehmendem Druck im Druckkessel mit Gaspolster gespeichert wird. Mit einem oder mehreren solcher Druckkessel mit Gaspolster können dynamische Druckänderungen reduziert werden. Solche dynamischen Druckänderungen entstehen bei Änderungen der Strömungsgeschwindigkeit aufgrund der Massenträgheit der Flüssigkeit. Solche Änderungen sind infolge von Anfahr- und Abfahr- oder Abstellvorgängen unvermeidbar. Insbesondere die rasche Änderung des Durchflusses und dadurch der Geschwindigkeit in einer Druckleitung, zum Beispiel durch schnelles Schließen oder Öffnen von Absperrorganen oder durch plötzlichen Pumpenstillstand, erzeugt in den Leitungen Druckstöße. Der Druck pendelt dann um den Ausgangsdruck nach oben und unten. Am Leitungsende wird die Druckwelle reflektiert, kommt als negative Welle zum Anfangspunkt zurück und schwingt in mehrfachem Hin- und Rücklauf allmählich aus. Hierbei kann es infolge Unterdrucks sogar zu einem Abreißen der Wassersäule kommen. Der darauf folgende Zusammenprall der beiden und unabhängig voneinander schwingenden Strömungen führt zu besonders gefährlichen Druckstößen. Grundsätzlich können Öffnungs- und Schließzeiten von Absperrorganen ausgedehnt werden, so dass die Geschwindigkeitsänderung in einer unschädlichen Weise verläuft. Es sind jedoch Betriebsfälle, wie plötzlicher Pumpenstillstand durch Stromausfall oder eine Not-AusSchaltung unvermeidlich. Mit dem Druckkessel mit Gaspolster können derartige Druckstöße reduziert werden, da beispielsweise bei einem plötzlichen Schließen eines Absperrorgans der Druckkessel mit Gaspolster Bindemittel weiter aufnimmt, sofern er in Flussrichtung vor dem Absperrorgan angeordnet ist und es zu einer allmählichen Drucksteigerung in der Bindemittelleitung kommt. Bei plötzlichem Ausfall einer Pumpe liefert der Druckkessel mit Gaspolster weiter Bindemittel, so dass die durch das Bindemittel ausgebildete Flüssigkeitssäule nicht abrupt abgestoppt wird. Wird zudem ein Druckkessel mit Gaspolster vor der Pumpe oder am Pumpeneingang angebracht, kann dieser Kessel als zusätzlicher Schutz für die Pumpe bzw. die vorgeordneten hydraulischen Elemente dienen, da er Zufuhrschwankungen ausgleichen und Druckstöße dämpfen kann. Die Bindemittelzufuhr zu dieser Pumpe muss unter einem bestimmten Druck stehen, da sich ansonsten der Druckkessel entleeren würde.

Die Vorrichtung kann auch mehrere Druckkessel mit Gaspolster umfassen. Die Druckkessel mit Gaspolster können auch entlang der Bindemittelleitung verteilt angeordnet sein. Das Volumen des Druckkessels mit Gaspolster bzw. der Druckkessel mit Gaspolster kann zumindest 300 I, vorzugsweise zumindest 1.000 I, insbesondere zumindest 5.000 I und vorzugsweise zumindest 10.000 l oder mehrere 10.000 I betragen. Das Volumen des Druckkessels mit Gaspolster umfasst sowohl das Volumen des Gasdruckraums als auch das Volumen des Bindemittelraums. Der Bindemittelraum beträgt in der Regel etwa 20% bis 50% des gesamten Volumens des Drucckessels. Im Normalzustand der Vorrichtung sollte der Druck im Gasdruckraum etwa das 0,5- bis 0,9-fache des Betriebsdruckes bzw. eines Einschaltdruckes einer Förderpumpe betragen.

Besonders bevorzugt wird ein oder werden mehrere Druckkessel mit Gaspolster(n) bei einer Staubbindevorrichtung eingesetzt, welche in Stillstands- oder Pausenzeiten leerläuft. Dies sind insbesondere Staubbindevorrichtungen, welche keine oder nur wenige selbstsperrende Drucksteuerventile aufweisen, die als Auslaufstopps fungieren. Bei einem Stillstand oder bei einer Pause leeren sich die Leitungen dieser Staubbindevorrichtung teilweise oder vollständig. Bei einer Wiederaufnahme des Betriebes werden die Leitungen zunächst mit Bindemittel gefüllt. Hierbei ist die Eigenschaft der Druckkessel mit Gaspolster vorteilhaft da sie zunächst Bindemittel mit hohem Druck schnell in die Leitung fördern, wobei aufgrund der Expansion des Gaspolsters der Druck im Druckkessel nachlässt, wodurch auch der Förderdruck entsprechend abnimmt. Bei einer fast vollständigen Füllung der Leitungen besteht dann ein reduzierter Druck, wodurch das Problem des Druckschlages verringert wird.

In einer Staubbindevorrichtung können unterschiedliche Abschnitte ausgebildet sein, die sich während eines Stillstandes unterschiedlich schnell entleeren. Die einzelnen Abschnitte können mit jeweils einem separaten Druckkessel versehen sein, sofern dies zweckmäßig ist. Vor allem die Abschnitte, welche sich schnell entleeren, werden vorzugsweise mit einem Druckkessel versehen, sodass sie wiederrum schnell aufgefüllt werden können.

Der Druckkessel mit Gaspolster weist vorzugsweise eine Zuführleitung zum Befüllen des Druckkessels mit Gaspolster und eine Abführleitung zum Leeren des Druckkessels mit Gaspolster auf, wobei die Zuführleitung gegenüber der Abführleitung eine Querschnittsverengung besitzt, so dass das Befüllen des Druckkessels mit Gaspolster mit einer langsameren Geschwindigkeit als das Entleeren des Druckkessels mit Gaspolster erfolgt. Hierdurch können Druckspitzen, die beim schnellen Abbremsen des Bindemittels in der Rohrleitung entstehen, allmählich über einen größeren Zeitraum verteilt aufgenommen werden. Das langsame Füllen des Druckkessels mit Gaspolster führt also zu einem allmählichen Abbremsen der bewegten Bindemittelflüssigkeitssäule. Eine solche Ausbildung des Druckkessels mit Gaspolster ist auch geeignet, um hangabwärts gerichtete Strömungen zuverlässig abzufangen. Andererseits kann bei einem Pumpenausfall sehr schnell ein großer Bindemittelstrom bereitgestellt werden, so dass ein entsprechender Druckschlag vermieden wird. Darüber hinaus kann durch verschiedene Mechanismen und/oder in Abhängigkeit von den jeweils herrschenden Betriebsdrücken, sowohl die Zeitdauer des Befüllens des/der Druckkessel(s) mit Gaspolster, als auch die Zeitdauer des Entleerens beeinflusst werden.

Anstelle oder in Kombination mit der Querschnittsverengung kann auch ein anderer Strömungswiderstand in der Zuführleitung vorgesehen sein. Der Strömungswiderstand kann beispielsweise als Druckminderer, Stauscheibe oder als Höhendifferenz ausgebildet sein. Ist der Druckkessel mit Gaspolster ein Stück oberhalb der Bindemittelleitung, vorzugsweise einige Meter oberhalb der Bindemittelleitung, angeordnet, dann muss das Bindemittel zum Befüllen des Druckkessels mit Gaspolster entgegen der Gravitationskraft nach oben gefördert werden und kann beim Entleeren des Druckkessels mit Gaspolster aufgrund der Gravitationskraft schnell in die Bindemittelleitung befördert werden. Wird das Verzögern beim Füllen und das Beschleunigen beim Entleeren allein aufgrund eines solchen Höhenunterschiedes bewirkt, dann kann die Zuführleitung und die Abführleitung als ein gemeinsamer Leitungsstrang ausgebildet sein. Bei Verwendung eines solchen Höhenunterschiedes ist es zweckmäßig, dass der Querschnitt der Zuführleitung und der Abführleitung groß ist, so dass die von der Bindemittelleitung zum Druckkessel mit Gaspolster führende Flüssigkeitswelle ein hohes Gewicht besitzt.

Wie es oben bereits erläutert ist, erlauben selbständig schließende Druckdüsen die als Auslaufstopp fungieren, einen Intervallbetrieb, da mit Druck beaufschlagtes Wasser immer unmittelbar an den Zerstäubungsdüsen beziehungsweise den hierzu benachbart angeordneten Druckdüsen anliegt. Weiterhin ist das Vorsehen eines oder mehrerer Druckkessel für den Intervallbetrieb vorteilhaft, da oftmals ein Entleeren auch mit selbständig schließenden Druckdüsen nicht vollständig verhindert werden kann. Die selbständig schließenden Druckdüsen führen oftmals zu einem sehr langsamen Entleeren, sodass ein Wiederauffüllen zu Beginn eines Sprühintervalls mittels eines Druckkessels mit Gaspolster sehr schnell erfolgen kann.

Diese Verwendung von selbständig schließenden Druckdüsen bzw. die Verwendung von selbständig schließenden Steuerventilen in Verbindung mit einem oder mehreren Druckkesseln bewirken sehr kurze Reaktionszeiten zum Aussprühen von Bindemittel nach einer Sprühpause. Die Reaktionszeit wird nach einer Pause von zumindest 5 min. ab dem Einschalten einer Pumpe oder dem Öffnen eines Ventils gemessen, so dass ein Strang, in dem sich die Zerstäubungsdüsen befinden, mit Bindemittel beaufschlagt wird, das unter Druck gesetzt ist, bis zu dem Zeitpunkt, an dem alle Düsen, die durch Einschalten der Pumpe bzw. Öffnen des Ventils mit Bindemittel versorgt werden, Bindemittel abgeben. Bei Prototypen wurden Reaktionszeiten von einigen wenigen Sekunden erzielt, selbst wenn der Strang länger als 100 m war. Staubbindevorrichtungen zum Erzeugen von Nebel sind vorzugsweise so ausgebildet, dass deren Reaktionszeit nicht größer als 10 s und insbesondere nicht größer als 5 s ist und Staubbindevorrichtungen zum Benetzen eines Bodens sind vorzugsweise so ausgebildet, dass deren Reaktionszeit nicht größer als 2 min. und insbesondere nicht größer als 1 min. und vorzugsweise nicht größer als 30 s ist. Derart kurze Reaktionszeiten können selbst bei großen Staubbindevorrichtungen erzielt werden, welche Stränge mit einer Länge von mehr als 100 m und insbesondere mehr als 300 m aufweisen.

Weiterhin sind für den Intervallbetrieb elastische Leitungen förderlich, die auch Bindemittel druckbeaufschlagt speichern können.

Die Vorrichtung weist vorzugsweise eine Pumpe auf, welche das Bindemittel pumpt. An die Bindemittelleitung kann ein Druckschalter gekoppelt sein, welcher beim Unterschreiten eines vorbestimmten Einschaltdruckes, dem Einschaltzeitpunkt, die Pumpe einschaltet. Hierdurch wird automatisch ein vorbestimmter Mindestdruck in der Bindemittelleitung aufrechterhalten.

Es können auch mehrere Druckschalter eingesetzt werden, denen unterschiedliche Funktionen zugeordnet sind bzw. die unterschiedliche Einschaltdrücke aufweisen. Diese Funktionen sind bspw.:
Druckschalter 1: Pumpe ein-/ausschalten
Druckschalter 2: Überdruck überwachen
Druckschalter 3 : Unterdruck überwachen (wie er z.B. bei Trockenlauf vorliegen kann)
Druckschalter 4: Leitungs-Enddrucküberwachung: falls am Ende der Leitung kein oder ein zu geringer Druck vorhanden ist, lässt dies auf einen Leitungsbruch oder eine Verstopfung schließen; oder auch Kontrolle, ob eine gewünschte Rohrnetz-Drucksenkung (z.B. vor Pumpenstop) bereits bis zum Ende durchgedrungen ist.
Druckschalter 5: Saugleitung auf korrekten Unterdruck-Wert überwachen. Dies ist ein Indikator, dass die Pumpe ansaugt und auch ein Indikator, ob die Ansaugkraft der Pumpe im richtigen Bereich ist (Vermeidung von Kavitation) bzw. ein Indikator, ob eine Verstopfung in einer Saugleitung oder einem Saugleitungsvorfilter vorliegt.
Druckschalter 6: Gasdrucküberwachung des Druckkessels mit Gaspolster
Druckschalter 7: Füllstatus Druckkessel. Nur wenn im laufenden Betrieb der Druck im Druckkessel bzw. in der diesbezüglichen Zuleitung oder der Hauptleitung etwa konstant ist, kann von einem vollen Druckkessel ausgegangen werden. Kann z.B. zur Entscheidungsfindung herangezogen werden, ob eine Pumpe schon abgeschaltet werden darf, oder noch nachlaufen soll, um in den Druckkessel zu puffern.
Druckschalter 8 und 9: Differenzdruckauswertung Vor-/Nachfilterdruck. Zur Überwachung des Filterstatus, ob dieser z.B. durch Schmutzansammlung einen zu hohen Druckverlust produziert und gereinigt werden muss. Es kann ein automatisierter Filterreinigungsprozess gestartet werden oder auch nur eine Meldung erfolgen, dass der Druckunterschied zu groß ist bzw. gereinigt werden soll.

Diese Druckschalter müssen nicht alle ständig aktiv geschaltet sein; sie können auch "konditioniert" werden. Z.B. wird der Unterdruckschalter erst während laufendem Pumpbetrieb zur Überwachung eines möglichen Unterdruckes herangezogen.

Die Druckschalter können auch mit zwei Schaltpunkten (unterer und oberer) ausgerüstet sein, um gewisse Hysteresen zu schaffen, welche das System stabiler und ruhiger laufen lassen, da nicht jede kleine Zustandsänderung sofort zu einem Schaltvorgang führt, sondern erst ein gewisser Schwellwert überschritten werden muss. Das System läuft dadurch stabiler und beginnt nicht zu takten/pendeln. Außerdem können die Druckschalter mit Zeitgliedern (z.B. Zeitrelais) verkoppelt sein, so dass das Erreichen eines Schaltpunktes zunächst nur das Zeitglied aktiviert und es erst nach Verstreichen der hinterlegten Zeit zum effektiv werdenden Schaltvorgang kommt.

Die Druckschalter können entweder direkt Vorgänge auslösen oder auch nur als Warnmelder tätig sein. Zur Überprüfung der korrekten Funktion können in der Nähe der Druckschalter auch visuelle Druckanzeigen, z.B. Manometer oder fernübermittelnde Drucktransmitter angebracht sein oder temporär angekoppelt werden.

Der Druckschalter kann auch derart ausgebildet sein, dass beim Überschreiten eines vorbestimmten Ausschaltdruckes, dem Ausschaltzeitpunkt, die Pumpe ausschaltet und/oder ein Notablassventil öffnet. Es kann auch eine Durchflussmesseinrichtung an der Bindemittelleitung derart gekoppelt sein, dass beim Unterschreiten einer vorbestimmten Mindestflussrate die Pumpe ausgeschaltet und/oder ein Notablassventil geöffnet wird. Hierdurch wird automatisch sichergestellt, dass der Druck in der Bindemittelleitung nicht zu sehr ansteigt.

Mit einem Druckschalter oder einer weiteren Druckmesseinrichtung kann auch ein übermäßig großer Durchfluss (= abnormer Betriebsstatus, z.B. Leitungsbruch) festgestellt werden. Zweckmäßigerweise erfolgt diese Durchflussmessung zeitgekoppelt, d.h. erst nach einer gewissen Stabilisierungsphase nach dem Hochfahren der Anlage (während der Hochfahrphase herrschen beispielsweise kurzzeitig abnorme Bedingungen) gilt der Messwert des Durchflusssensors. Dies kann noch an die Bedingung gekoppelt sein, dass beispielsweise die Durchflussüberschreitung eine gewisse Mindestzeit aufrechterhalten bleibt.

Es kann eine Ausschaltverzögerungseinrichtung vorgesehen sein, welche ein Ausschalten der Pumpe erst nach Ablauf eines vorbestimmten Verzögerungszeitintervalls erlaubt, wobei das Verzögerungszeitintervall mit dem Einschaltzeitpunkt oder dem Ausschaltzeitpunkt oder einem Zeitpunkt zwischen dem Einschaltzeitpunkt und dem Ausschaltzeitpunkt beginnt. Eine solche Ausschaltverzögerungseinrichtung verhindert, dass kurzfristige Druck- bzw. Volumenstromschwankungen zu einem Ausschalten der Pumpe führen, wodurch weitere Druckänderungen verursacht werden würden. Die Zustandsänderung, d.h. der Druckabfall bzw. die Reduzierung des Durchflusses muss somit eine gewisse Zeitdauer vorliegen, bis die Pumpe geschaltet wird. Das Verzögerungszeitintervall beträgt vorzugsweise zumindest 5 Sekunden, vorzugsweise zumindest 15 Sekunden und insbesondere zumindest 30 Sekunden.

An die Bindemittelleitung kann ein Überdruck-Druckschalter gekoppelt sein, der bei Detektion eines vorbestimmten Überdruckes, der größer als der Ausschaltdruck ist, die Pumpe ausschaltet und/oder ein Notablassventil öffnet. Das Schalten aufgrund der Detektion eines Überdruckes mittels des Überdruck-Druckschalters übersteuert vorzugsweise alle weiteren Steuervorgänge, wie zum Beispiel ein Nicht-Ausschalten aufgrund eines andauernden Verzögerungszeitintervalls. Außerdem kann eine Signalisierung/Alarmmeldung/Alarmfall-Maßnahmen-Einleitung, wie z.B. zusätzliches Abtrennen der Bindemittelzufuhr erfolgen.

Die Vorrichtung ist vorzugsweise derart ausgebildet, dass die Fließgeschwindigkeit des Bindemittels in den Leitungen nicht größer als 5 m/s und vorzugsweise nicht größer als 3 m/s ist. Je größer die Fließgeschwindigkeit ist, desto größer sind die Druckverluste. Die Druckverluste sind proportional zum Quadrat der Fließgeschwindigkeit. In der Praxis haben sich diese Obergrenzen als sehr vorteilhaft erwiesen, da mit diesen Fließgeschwindigkeiten eine Versorgung mehrerer Zerstäubungsdüsen über eine lange Strecke (z.B. 1 bis 5 km) zuverlässig bei sinnvollen Leitungsquerschnitten möglich ist. Bei höheren Fließgeschwindigkeiten kann es zu Problemen durch Druckstöße kommen.

Die Bindemittelleitung kann einen Hauptstrang und einen parallel zum Hauptstrang verlaufenden Nebenstrang mit geringerem Querschnitt aufweisen, wobei der Nebenstrang mit seinen Enden jeweils an den Hauptstrang mündet und ein Volumenstrommessgerät im Nebenstrang angeordnet ist. Der im Nebenstrang gemessene Durchfluss ist proportional zum Durchfluss im Hauptstrang bzw. Hauptstrom und lässt somit auf den gesamten Volumenstrom durch den Hauptstrang und den Nebenstrang schließen. Die Messung des geringeren Volumenstroms im Nebenstrang ist wesentlich einfacher als die Messung des wesentlich größeren Volumenstroms im Hauptstrang.

Das Volumenstrommessgerät kann derart ausgebildet sein, dass es die Strömung indirekt anhand der Temperatur des Bindemittels in der Pumpe oder in Strömungsrichtung kurz nach der Pumpe und/oder anhand der Stromaufnahme der Pumpe und/oder anhand der Druckdifferenz vor/nach der Pumpe und/oder anhand des Druckes vor der Pumpe und/oder anhand des Druckes nach der Pumpe und/oder anhand der Akustik der Pumpe und oder anhand der aktuellen Energieaufnahme der Pumpenwelle erfasst. Da die Pumpe Wärme erzeugt und das Bindemittel oftmals von einem kühlen Reservoir, wie zum Beispiel einem Brunnen, bereitgestellt wird, kann anhand der Temperatur des Bindemittels in der Pumpe oder in Strömungsrichtung kurz nach der Pumpe auf den Volumenstrom des Bindemittels in der Bindemittelleitung bzw. in der Pumpe geschlossen werden.

In der Bindemittelleitung kann eine Entlüftungseinrichtung angeordnet sein, welche Luftblasen aus der Bindemittelleitung nach außen abgibt. Solche Luftblasen können durch Ausgasung des Bindemittels aufgrund von Druckänderungen entstehen. Die Entlüftungseinrichtung kann ein passives Entlüftungsventil sein, das für Gas durchlässig und für Flüssigkeiten undurchlässig ist. Die Entlüftungseinrichtung kann auch ein schaltbares Ventil sein, das in der Bindemittelleitung angeordnet ist. Beim Vorliegen einer Gasblase wird das schaltbare Ventil mittels einer Steuereinrichtung geöffnet. Das Vorliegen einer Gasblase kann anhand bestimmter Betriebszustände von der Steuereinrichtung und/oder mittels eines Sensors detektiert werden. Die von der Steuereinrichtung detektierbaren vorbestimmten Betriebszustände sind zum Beispiel ein Stillstand der Förderung, eine geringe Pumpenlast beim Anfahren. Gasblasen können mittels Temperatursensoren oder Drucksensoren, oder Ultraschallsensoren, oder einem magnetisch induktiven Sensor oder einem Röntgengerät oder einem Mikrofon bestimmt werden. Insbesondere bei Überwachung der Druckentwicklung beim Anfahren der Pumpe kann ein langsamer Druckanstieg als Gasblasen enthaltendes Bindemittel in der Bindemittelleitung beurteilt werden.

Die Entlüftungseinrichtung ist vorzugsweise an lokalen Hochpunkten und Orten mit Volumenstromänderungen, wie zum Beispiel scharfkantige Öffnungen, Druckminderer, Querschnittsverengungen, angeordnet, an welchen sich Luftblasen sammeln können. Vorzugsweise wird eine Entlüftungseinrichtung mit einem schaltbaren Ventil mit einer Entlüftungseinrichtung mit einem passiven Entlüftungsventil kombiniert, wobei beim Anfahren der Vorrichtung zunächst mittels dem schaltbaren Ventil größere Luftmengen entlüftet werden und während des Normalbetriebs die Entlüftung ausschließlich oder fast überwiegend mit dem passiven Entlüftungsventil erfolgt.

Die Bindemittelleitung kann ein oder mehrere Drucksteuerventile aufweisen, welche als Druckschaltventile ab einem vorbestimmten Schaltdruck öffnen und somit eine Bindemittelzufuhr an die Zerstäubungsdüse(n) freigeben oder als Druckregelventile auch ab einem vorbestimmten Schaltdruck öffnen und zugleich einen Druck auf der Abströmseite des Druckregelventils auf einen vorbestimmten Druckbereich regeln. Solche Drucksteuerventile besitzen dann die zusätzliche Funktion eines Druckminderers. Mit einem oder mehreren solcher Drucksteuerventile kann die Bindemittelleitung in unterschiedliche Druckzonen unterteilt werden. Diese Drucksteuerventile weisen vorzugsweise unterschiedliche Schaltdrücke auf. Insbesondere sind die Drucksteuerventile so in der Bindemittelleitung angeordnet, dass Druckzonen mit zum Abstand vom Bindemittelreservoir abfallenden Druck ausgebildet sind.

Die mehreren Drucksteuerventile können in einem Hauptstrang der Bindemittelleitung angeordnet sein, so dass auch der Hauptstrang in mehrere Druckzonen unterteilt ist.

Ein oder mehrere Drucksteuerventile können in einem von einem Hauptstrang abzweigenden Zweigstrang der Bindemittelleitung angeordnet sein, so dass der jeweilige Zweigstrang bei Unterschreiten des Schaltdruckes geschlossen wird. Hierdurch wird ein Leerlaufen des Hauptstranges vermieden und das jeweilige Drucksteuerventil ist einer oder mehreren in dem Zweigstrang angeordneten Zerstäubungsdüsen zugeordnet.

Durch das Vorsehen einer oder mehrerer Drucksteuerventile können Druckunterschiede in der Bindemittelleitung gezielt gesteuert und kontrolliert werden. Derartige Druckunterschiede können aufgrund von Höhenunterschieden entlang der Bindemittelleitung, langen Leitungslängen und einem dadurch auftretenden Druckabfall, Temperaturänderungen in der Bindemittelleitung, Druckschwankungen durch Schaltvorgänge verursacht werden. Mit den Drucksteuerventilen kann vor allem ein Leerlaufen der Bindemittelleitung, insbesondere des Hauptstranges der Bindemittelleitung, verhindert werden, wodurch ein schnelles Anfahren nach einem Betriebsstopp wieder möglich ist, da zumindest der Hauptstrang der Bindemittelleitung bereits mit Binde-mittel gefüllt ist. Hierdurch werden auch Druckschläge vermieden bzw. reduziert. Die Drucksteuerventile können auch in Zerstäubungsdüsen integriert sein oder in Kombination mit diesen angeordnet sein. Derartige Zerstäubungsdüsen schließen unterhalb eines vorbestimmten Schließdruckes selbstständig, wodurch ein Entleeren der Bindemittelleitung im Bereich der Zerstäubungsdüsen vermieden wird. Die Zerstäubungsdüsen sind oftmals in Zweigsträngen angeordnet. Die Drucksteuerventile schließen vorzugsweise automatisch bei Unterschreiten eines vorbestimmten Schließdruckes, so dass sie die einzelnen Zonen der Bindemittelleitung selbstständig absperren können. Derartige Drucksteuerventile fungieren als Auslaufstopps, um ein Leerlaufen der Bindemittelleitung zu verhindern.

Zur Erzeugung von Zonen mit unterschiedlichem Druck können auch Druckminderer anstelle von Drucksteuerventilen verwendet werden, welche in den entsprechenden Leitungen angeordnet sind.

Solche Druckminderer können auch einzelnen Zerstäubungsdüsen zugeordnet bzw. in diese integriert sein. Ein solcher Druckminderer setzt den Druck auf einen vorbestimmten verminderten Druck herab. Hierdurch wird sichergestellt, dass an der Zerstäubungsdüse das Bindemittel mit dem konstanten, verminderten Druck, anliegt, sofern im Bereich vor dem Druckminderer das Bindemittel mit einem an sich beliebigen, jedoch höheren Druck vorliegt. Der Druck in der Leitung kann daher schwanken und trotzdem liegt an der jeweiligen Zerstäubungsdüse das Bindemittel mit einem vorbestimmten Druck an und es wird eine vorbestimmte Bindemittelmenge sowie ein vorbestimmtes Sprühprofil von der Düse ausgegeben.

Ein solcher Druckminderer kann jeweils einer einzelnen Zerstäubungsdüse oder einer Gruppe von mehreren Zerstäubungsdüsen zugeordnet sein.

Die Bindemittelleitung ist vorzugsweise mit einer Elastizität zum elastischen Puffern von Bindemittel mit einem Elastizitätsvolumen von 1 Promille und vorzugsweise zumindest 1 % des gesamten Volumens der Bindemittelleitung aufgrund einer Rohrwandelastizität und/oder zumindest einer Gastasche und/oder eines Druckkessels mit Gaspolster ausgebildet. Vorzugsweise beträgt dieses Elastizitätsvolumen zumindest 2 % bzw. zumindest 5 % des gesamten Volumens der Bindemittelleitung. Aufgrund dieser Elastizität können Druckschwankungen in der Bindemittelleitung ausgeglichen werden, ohne dass Druckschläge erzeugt werden bzw. werden die Auswirkungen von Druckschlägen gemindert. Um eine Rohrwandelastizität vorzusehen, werden vorzugsweise Kunststoffrohre, insbesondere PE-Rohre, welche insbesondere aus Weich-Polyethylen ausgebildet sind, als Bindemittelleitung verwendet. Der Innendurchmesser der Rohre beträgt vorzugsweise zumindest 16 mm. Die Bindemittelleitung weist vorzugsweise eine Länge von zumindest 100 m auf. Sie kann mehrere Kilometer lang sein. Die Bindemittelleitung ist vorzugsweise mit den oben erläuterten Drucksteuerventilen in Zonen bzw. Abschnitte mit einer Länge von 100 bis 600 m, vorzugsweise 250 bis 500 m unterteilt. Derartige Zonen aus elastischen Rohren bieten ausreichende Elastizität, um Druckspitzen beim Schließen von Absperrorgangen, welche Ventile und Düsen umfassen, derart zu dämpfen, dass sie keine Schäden anrichten. Die PE-Rohre können auch aus Hart-Polyethylen ausgebildet sein. In Rohren aus Weich-Polyethylen können einfach Löcher gestanzt werden, um Düsen oder Zweigleitungen zu setzen.

Vorzugsweise beträgt die maximale Elastizität der Bindemittelleitung 10 % und insbesondere maximal 5 % des gesamten Volumens der Bindemittelleitung. Eine zu große Elastizität verursacht eine Trägheit beim Ansprechverhalten und kann dazu führen, dass ein Abgeben des Bindemittels in kurzen Impulsen nicht gezielt möglich ist.

Die Bindemittelleitung kann einen Hauptstrang aufweisen, in welchem ein Druckminderer angeordnet ist, und parallel zum Hauptstrang ist ein Nebenstrang angeordnet, in welchem sich ein Rückschlagventil befindet, das entgegen der Durchflussrichtung des Druckminderers öffnet . Ein Druckminderer wirkt je nach Konstruktionsprinzip auch als Rückschlagventil, so dass eine Druckspitze, welche auf der druckreduzierten Seite des Druckminderers auftritt, nicht aus der druckreduzierten Zone durch den Druckminderer entweichen kann. Durch das Vorsehen des Nebenstranges mit dem Rückschlagventil, das entgegen der Durchflussrichtung des Druckminderers öffnet, kann eine solche Druckspitze durch den Nebenstrang aus der druckreduzierten Zone entweichen, so dass sich hier wieder der durch den Druckminderer verringerte Druck einstellen kann. Der Nebenstrang weist vorzugsweise einen kleineren Durchmesser als der Hauptstrang auf.

Vorzugsweise weist die Bindemittelleitung elastische Zweigleitungen auf, welche an einem gemeinsamen Leitungsstrang bzw. Leitungsabschnitt angeschlossen sind, wobei an den vom Leitungsabschnitt bzw. Leitungsstrang entfernten Ende der Zweigleitungen jeweils eine Zerstäubungsdüse angeordnet ist. Aufgrund des Gewichtes der Zerstäubungsdüse oder eines daran vorgesehenen Zusatzgewichtes richtet sich die jeweilige Zweigleitung selbsttätig vertikal aus. Hierdurch positioniert und justiert sich die flexible Zweigleitung, selbst wenn die gesamte Staubbindevorrichtung auf Grund äußerer Umstände, wie zum Bespiel Wind, bewegt wird. Eine solche Staubbindevorrichtung kann sowohl zum Erzeugen eines künstlichen Nebels als auch zum Benetzen des Bodens ausgebildet sein.

Gemäß einem dritten Aspekt der vorliegenden Erfindung kann die Bindemittelleitung an einem Tragseil aufgehängt sein und die Bindemittelleitung elastisch ausgebildet sein, wobei die Bindemittelleitung etwa parallel zum Tragseil angeordnet und mit diesem an mehreren Stellen befestigt ist.

Die Bindemittelleitung mit oder ohne elastische Zweigleitungen kann an ein Seil mit entsprechenden Rohrleitungshaken hängend befestigt sein. Eine solche Anordnung lässt sich sehr einfach und schnell über lange Strecken montieren. Hierzu genügt ein dünnes Tragseil, insbesondere ein Stahlseil, das über eine bestimmte Strecke gespannt wird, an welchen die Bindemittelleitung mittels der Rohrleitungshaken aufgehängt wird. Vorzugsweise ist die Bindemittelleitung aus einem Kunststoffmaterial ausgebildet, in das Löcher zum Anschließen der Zweigleitungen gestochen werden können. Dieses Stechen der Löcher ist auch noch nach dem Aufhängen der Bindemittelleitung am Tragseil möglich.

Die Zerstäubungsdüsen können entlang der Bindemittelleitung mit einem Abstand von nicht mehr als 10 m, vorzugsweise nicht mehr als 8 m und insbesondere nicht mehr als 7 m angeordnet sein.

Die Zerstäubungsdüsen zum Absprühen des Bindemittels können mit einem kreisförmigen oder kreissegmentförmigen Sprühkegel ausgebildet sein, wobei der maximale Abstand zwischen zwei benachbarten Zerstäubungsdüsen nicht größer als 80% des Durchmessers dieses Kreises ist.

Die Bindemittelleitung kann mit zumindest einem Füllratenkontrollventil versehen sein, welches anhand eines detektierten Volumenstroms des Bindemittelmediums einen Durchgang für das Bindemittel etwa umgekehrt proportional zum Volumenstrom öffnet, das bedeutet, je geringer der Volumenstrom ist, desto stärker ist das Füllratenkontrollventil geöffnet. Bei einem geringen Volumenstrom wird der Durchgang vollständig geöffnet. Bei einem hohen Volumenstrom kann er vollständig geschlossen oder soweit geschlossen werden, dass ein vorher bestimmter Volumenstrom nicht überschritten wird. Hierdurch kann sichergestellt werden, dass eine Pumpe nicht außerhalb ihrer QH-Kennlinie (= Volumenstrom-Höhen-Kennlinie) betrieben wird. Zudem kann hierdurch sichergestellt werden, dass bei einem Wiederbefüllen einer Bindemittelleitung der Volumenstrom zunächst begrenzt wird, um beim Austreiben der in der Bindemittelleitung vorhandenen Luft keinen zu starken Impuls aufzubauen, der am Ende des Wiederbefüllvorganges einen entsprechend großen Druckschlag verursachen würde; somit ist das langsame Füllen eine Zusatzfunktion dieses Ventiles.

Der Volumenstrom kann anhand der Druckdifferenz in Flussrichtung vor und hinter dem Füllratenkontrollventil bestimmt werden und/oder das Füllratenkontrollventil kann von einer Steuereinrichtung zusätzlich angesteuert werden, wobei der gewünschte Volumenstrom einstellbar ist.

Die Bindemittelleitung kann mit zumindest einem Befüllungskontrollventil versehen sein, welches anhand eines detektierten Füllzustandes der Bindemittelleitung einen Durchgang etwa proportional zum Füllzustand öffnet. Dieses Befüllungskontrollventil wirkt ähnlich wie das oben erläuterte Füllratenkontrollventil und verhindert beim Wiederbefüllen einen zu hohen Volumenstrom, welcher am Ende des Wiederbefüllungsvorganges einen hohen Druckschlag verursachen würde.

Das Befüllungskontrollventil kann mit zwei Öffnungsstufen ausgebildet sein, wobei bei einem geringen Füllzustand der Durchgang nur gering geöffnet ist, und bei einem hohen Füllzustand der Durchgang vollständig geöffnet ist. Das Befüllungskontrollventil kann auch kontinuierlich geöffnet bzw. geschlossen werden.

Die Bindemittelleitung kann ein Druckhalteventil aufweisen, welches anhand eines in der Bindemittelleitung in Flussrichtung vor dem Druckhalteventil detektierten Druckes sich etwa proportional zum Druck öffnet. Hierdurch wird der Druck in Flussrichtung vor dem Druckhalteventil in etwa konstant gehalten, da bei einer Reduzierung des detektierten Druckes das Druckhalteventil sich etwas schließt, wodurch durch den Rückstau der Druck in Flussrichtung vor dem Druckhalteventil wieder ansteigt. Das Druckhalteventil ist vorzugsweise in einem Hauptstrang der Bindemittelleitung angeordnet.

Die Bindemittelleitung weist einen Hauptstrang und einen vom Hauptstrang abzweigenden Zweigstrang auf. Im Zweigstrang ist ein Steuerventil vorgesehen.

Das Steuerventil kann als Druckentlastungsventil ausgebildet sein, das sich etwa proportional zum Druck im Hauptstrang öffnet. Steigt der Druck im Hauptstrang über einen vorbestimmten Druck, dann führt dies dazu, dass Bindemittel über den Zweigstrang abgeleitet wird. Das Bindemittel kann über Zerstäubungsdüsen oder über eine Leerleitung abgegeben werden. Hierdurch wird sichergestellt, dass im Hauptstrang kein unerwünscht hoher Druck anliegt. Das Druckentlastungsventil kann sich erst ab einem vorbestimmten Mindestdruck im Hauptstrang öffnen.

Das Steuerventil im Zweigstrang kann auch als Schnellablassventil ausgebildet sein, das ab einem vorbestimmten Mindestdruck im Hauptstrang sich im Wesentlichen vollständig öffnet, so dass einem schnellen Druckanstieg im Hauptstrang entgegengewirkt werden kann. Nach Absinken des Druckes im Hauptstrang kann das Schnellablassventil langsamer schließen, als es sich öffnet, wodurch ein langsamer Druckaufbau im Hauptstrang wieder möglich ist.

Die Bindemittelleitung kann mit einer Brunnenleitung verbunden sein, welche von der Bindemittelleitung nach unten in den unterirdischen Brunnen führt, wobei in der Brunnenleitung eine Pumpe angeordnet ist, und das Steuerventil im Zweigstrang so angesteuert wird, dass beim Einschalten der Pumpe das Steuerventil über ein vorbestimmtes Zeitintervall allmählich geschlossen wird und/oder beim Ausschalten der Pumpe über ein weiteres vorbestimmtes Zeitintervall allmählich geöffnet wird. Bei derartigen Brunnenleitungen wird Bindemittel bzw. Wasser in großen Fördermengen gefördert. Die Pumpe ist in der Regel tief unten angeordnet, wodurch eine hohe Wassersäule ausgebildet ist. Die Gefahr von Druckschlägen ist groß. Durch das allmähliche Schließen des Steuerventils beim Einschalten der Pumpe wird die Ableitung des Bindemittels über die Zweigleitung allmählich reduziert, wodurch der Druck in der Bindemittelleitung allmählich gesteigert wird. Beim Ausschalten der Pumpe wird das Steuerventil allmählich geöffnet, wodurch der Druck in der Bindemittelleitung allmählich verringert wird und einem Druckschlag entgegenwirkt. Das Öffnen des Steuerventils erfolgt vorzugsweise kurz vor dem Ausschalten der Pumpe, so dass beim Ausschalten der Pumpe bereits ein verringerter Druck in der Bindemittelleitung vorliegt.

Die Bindemittelleitung kann ein Steuerventil aufweisen, das von einer Steuereinrichtung derart angesteuert wird, dass es sich mit dem Einschalten einer Pumpe über ein vorbestimmtes Zeitintervall langsam öffnet und/oder beim Ausschalten der Pumpe geschlossen wird. Mit diesem Steuerventil werden Druckstöße beim Einschalten und Ausschalten der Pumpe verringert. Das Steuerventil kann als Rückschlagventil ausgebildet sein, das einen Rückfluss in bzw. durch die Pumpe verhindert.

Die Steuereinrichtung des Steuerventils kann auch zum Ansteuern der Pumpe ausgebildet sein, so dass das Ein- und Ausschalten der Pumpe synchron mit dem Schalten des Ventils erfolgt.

Vorzugsweise ist eine Steuereinrichtung vorgesehen, die in Abhängigkeit eines Füllstandes der Bindemittelleitung, des Füllstandes des Druckkessels mit Gaspolster und/oder dem Volumenstrom in der Bindemittelleitung die Zufuhr von Bindemittel aus dem Druckkessel mit Gaspolster in die Bindemittelleitung steuert. Diese Steuereinrichtung ist vorzugsweise so ausgebildet, dass bei einem geringen Füllstand der Bindemittelleitung Bindemittel mit einem hohen Volumenstrom aus dem Druckkessel mit Gaspolster abgezogen wird, um die Bindemittelleitung schnell zu füllen, wobei bei Erreichen eines höheren Füllstandes der Fluss des Bindemittels vermindert oder verhindert wird, um einen Druckschlag zu vermeiden. Zunächst kann gemeinsam mit dem Druckkessel mit Gaspolster und der Pumpe Bindemittel der Bindemittelleitung zugeführt werden, wobei mit zunehmendem Füllstand die Zufuhr aus dem Druckkessel mit Gaspolster verringert oder vollständig eingestellt und die Förderleistung der Pumpe entsprechend angepasst und vorzugsweise verringert wird.

Der Füllstand des Druckkessels mit Gaspolster kann anhand des Gasdruckes, des Bindemitteldruckes, mittels eines Ultraschallsensors oder einer Volumenstrommessung erfolgen. Die Volumenstrommessung kann mit einem oben beschriebenen Volumenstrommessgerät ausgeführt werden. Es können auch mehrere Druckkessel mit Gaspolster vorhanden sein.

In der Bindemittelleitung kann ein oder mehrere Zyklonfilter angeordnet sein, der eine Spülzuführleitung und eine Spülabgangsleitung mit einem Spülabgangsventil aufweist, so dass beim Anhalten eines Bindemittelstroms durch den Zyklonfilter ein Spülen des Zyklonfilters möglich ist, ohne dass die übrigen Abschnitte der Bindemittelleitung geleert werden müssen. An die Spülzuführleitung kann ein Druckkessel mit Gaspolster und/oder ein Fremdwasser-Druckanschluss angeschlossen sein. Der Zyklonfilter kann dann auch in eine Saugleitung eingebaut sein und während des Betriebs der Pumpe gespült werden. Die Saugleitung ist ein Leitungsabschnitt, welcher in Flußrichtung vor einer Pumpe angeordnet ist. Beim Anordnen eines Filters in der Saugleitung wird sichergestellt, dass das Bindemittel gefiltert wird, bevor es zur Pumpe gelangt. Hierdurch kann die Betriebszeit der Pumpe verlängert werden. Zum Spülen des Zyklonfilters wird entweder die Pumpe angehalten und über die Spülzuführleitung vom Druckkessel oder vom Fremdwasser-Druckanschluss Spülmedium zugeführt, oder es wird bei saugseitigem Einbau des Zyklonfilters zum Spülen der Bindemittelstrom durch den Zyklonfilter angehalten und der Zyklonfilter rückgespült.

Bei herkömmlichen Vorrichtungen zur Vermeidung von Staub werden große Mengen von Wasser lokal ausgetragen, um dann von Fahrzeugen großflächig verteilt zu werden. Eine solche Verteilung ist bei bekannten Systemen oftmals essentiell für den Erfolg der Staubvermeidung. Mit der Erfindung kann hingegen über große Flächen Bindemittel selbsttätig gleichmäßig verteilt werden Eine Berücksichtigung der Verteilung z.B. durch Fahrzeuge ist hier nicht notwendig, da die Erfindung selbstverteilend arbeitet bzw. über eine Selbstverteilung verfügt.

Die oben erläuterten Staubbindevorrichtungen können zum Binden von Staub verwendet werden, wobei die einzelnen Aspekte separat oder in Kombination eingesetzt werden können.

Eine solche Staubbindevorrichtung kann zum Erzeugen eines künstlichen Nebels verwendet werden, wobei dann der Staub in der Luft gebunden wird.

Eine Staubbindevorrichtung kann auch zum Benetzen eines Bodens verwendet werden, wobei dann der Staub am Boden gebunden wird und nicht mehr in die Luft aufgewirbelt werden kann.

Bei einem solchen Verfahren zum Binden von Staub werden die Bindemittel vorzugsweise in Intervallen mit Sprühphasen und Pausenphasen ausgetragen.

Zum Benetzen eines Bodens betragen die Sprühphasen und die Pausenphasen zumindest 2 Minuten, bzw. 5 Minuten vorzugsweise zumindest 10 Minuten. Die Sprühphasen dauern vorzugweise nicht länger als eine Stunde und insbesondere nicht länger als 30 Minuten. Die Pausenphasen können etwa gleich lang wie die Sprühphasen dauern. Die Pausenphasen können jedoch auch länger und insbesondere ein Vielfaches der Sprühphasen betragen.

Beim Erzeugen eines künstlichen Nebels beträgt die Dauer der Sprühphasen und der Pausenphasen vorzugsweise nicht mehr als 120 Sekunden und insbesondere nicht mehr als 30 Sekunden. Die Dauer der Sprühphasen und der Pausenphasen kann einige wenige Sekunden dauern. Beim Erzeugen eines künstlichen Nebels sind die Sprühphasen vorzugweise länger als die Pausenphasen. Die Pausenphase wird so kurz gewählt, dass keine oder nur eine sehr geringe Lücke zwischen aufeinanderfolgende Nebelwolken besteht. Je langsamer die Luftströmung ist, in welcher sich der künstliche Nebel bzw. die künstliche Nebelwolke befindet, desto länger kann die Pausenphase sein. Je größer die Nebeltröpfchen sind, desto schneller sinken sie ab und desto kürzer sind die entsprechenden Pausenphasen einzustellen. Bei einer Tröpfchengröße von etwa 100 µm bis 200 µm sind die Pausenphase vorzugsweise nicht größer als 5 Sekunden. Bei einem Nebel, in dem die Tröpfchen überwiegend eine Tröpfchengröße von weniger als 100 µm aufweisen, kann die Pausenphase auch länger eingestellt werden. Ist es erwünscht, möglichst wenig Bindemittel einzusetzen, z.B. um eine Bodenvernässung zu vermeiden, ist es auch möglich, die Sprühphasen so kurz wie möglich zu halten und die Pausenphasen zu verlängern. Dies muss empirisch festgelegt werden.

Mit den oben erläuterten Staubbindevorrichtungen ist es sogar möglich, sehr kurze Pausenphasen von 1 bis 3 Sekunden einzustellen und zu betreiben. Für einen derart schnell schaltenden Intervallbetrieb sind die oben erläuterten Maßnahmen, wie elastische Speicherkapazität in einem Druckkessel bzw. in elastischen Leitungen und/oder das Vorsehen von Drucksteuerventilen in oder nahe an den Zerstäubungsdüsen von Vorteil, da hierdurch selbst bei einem Strang mit einer Länge von zumindest 50 Meter und insbesondere zumindest 200 Meter ein solcher Intervallbetrieb möglich ist.

Beim Erzeugen eines künstlichen Nebels ist die Sprühphase vorzugsweise länger als die Pausenphase. Die Sprühphase kann insbesondere doppelt so lange wie die Pausenphase sein oder ein Vielfaches davon betragen.

Zur Vermeidung von Pfützenbildung wird die Staubbindevorrichtung so betrieben, dass das Bindemittel mit einer Rate von nicht mehr als 6 l/m²h und vorzugsweise nichtmehr als 4 l/m²h und vorzugsweise nicht mehr als 3 l/m²h betrieben wird. Ist der Boden versiegelt, dann sind diese Sprühraten sogar noch kleiner und betragen vorzugsweise nicht mehr als 1,2 l/m²h bzw. nicht mehr als 1 l/m²h und vorzugsweise nicht mehr als 0,8 l/m²h.

Die Staubbindevorrichtung zum Erzeugen eines künstlichen Nebels wird vorzugsweise so betrieben, dass das Bindemittel in einen Bereich gesprüht wird, der so weit von der Staubquelle beabstandet ist, dass in diesem Bereich die Luftströmung nicht größer als 1 m/s, insbesondere nicht größer als 0,8 m/s und vorzugsweise nicht größer als 0,7 m/s ist. Besonders vorteilhaft ist es, wenn die Luftströmung nicht größer als 0,5 m/s ist.

Die Erfindung wird nachfolgend beispielhaft anhand der beigefügten Zeichnungen erläutert. Die Zeichnungen zeigen schematisch in:
- Figur 1: eine Abbaustelle mit einer Vorrichtung zum Binden von Staub in der Draufsicht,
- Figur 2: einen Leitungsplan der Vorrichtung zum Binden von Staub aus Figur 1,
- Figur 3: eine stehende Anordnung von Zerstäubungsdüsen in einer Seitenansicht,
- Figur 4: einen Sprühbereich der Düsen aus Figur 3,
- Figur 5: Zerstäubungsdüsen an einer hängenden Rohrleitung schematisch grob vereinfacht in einer perspektivischen Ansicht,
- Figur 6: einen Sprühbereich der Düsen aus Figur 5 schematisch in der Draufsicht,
- Figur 7: eine Vorrichtung zur Erzeugung einer Nebelwand schematisch in einer Seitenansicht,
- Figur 8: eine Seilanordnung zum Montieren eines hängenden Rohrleitungssystems,
- Figur 9: eine weitere Seilanordnung zum Montieren eines hängenden Rohrleitungssystems,
- Figur 10: Leitungsplan einer weiteren Vorrichtung zum Binden von Staub,
- Figur 11: eine Volumenstrommessung im Nebenstrang,
- Figur 12: einen Nebenstrang mit Rückschlagventil zum Entspannen von Druckzonen, und
- Figur 13: einen Ausschnitt einer Vorrichtung zum Binden von Staub mit einer Brunnenleitung.

Die erfindungsgemäße Vorrichtung dient zum Binden von Stäuben verschiedensten Ursprungs, insbesondere mineralische Stäube, Kunststoffstäube, Holzstäube, sowie von Luftverunreinigungen mittels präzise ausgebrachten Bindemittels. "Staub" im Sinne der vorliegenden Erfindung sind alle festen und flüssigen Partikel in einer Atmosphäre, welche mit einem Bindemittel aus der Atmosphäre entfernt werden können oder welche mit einem Bindemittel am Boden gebunden werden können, so dass sie nicht in die Atmosphäre gelangen. Staub kann neben festen Partikeln auch Aerosole oder Dämpfe umfassen.

Das Bindemittel ist vorzugsweise Wasser. Das Wasser wird in der Regel ohne weitere Zusatzstoffe, insbesondere ohne Netzmittel, verwendet. Lediglich im Winterbetrieb kann es zweckmäßig sein, dass ein Frostschutzmittel hinzugegeben wird. Das Wasser kann aus unterschiedlichen Quellen, zum Beispiel Brunnen, Trinkwasserleitungen, Zisternen oder dergleichen bezogen werden. Enthält das Wasser Verunreinigungen, dann ist es zweckmäßig, einen Filter vorzusehen. Die Porengröße des Filters sollte nicht größer als 200 µm, vorzugsweise nicht größer als 150 µm sein. Es kann auch zweckmäßig sein, Filter mit einer Porengröße von 130 µm zu verwenden.

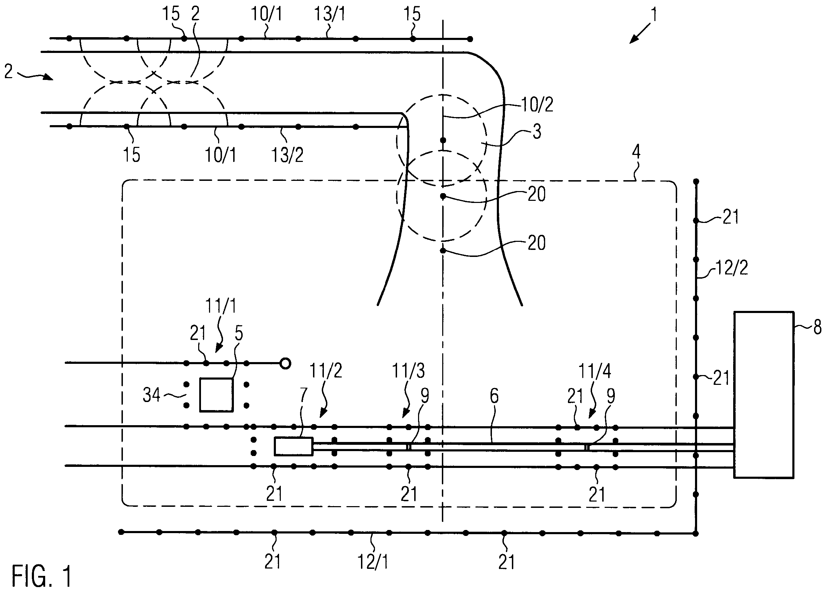

Ein erstes Ausführungsbeispiel einer Staubbindevorrichtung 1 für eine Abbaustelle ist in Figur 1 dargestellt. Die Abbaustelle kann ein Kieswerk zum Abbauen von Kies oder ein Steinbruch zum Abbauen von Steinen sein. Im vorliegenden Ausführungsbeispiel ist die Abbaustelle ein Kieswerk. Das Kieswerk besitzt einen nicht befestigten Fahrweg 2, der über eine Rampe 3 in eine Kiesgrube 4 führt.

Diese Kiesgrube 4 weist eine Siebeinrichtung 5 und eine Förderbandstrecke 6 auf. Die Förderbandstrecke 6 erstreckt sich von einem Aufgabetrichter 7, der sich in der Kiesgrube 4 befindet, zu einem Bearbeitungsgebäude 8, das sich außerhalb der Kiesgrube 4 befindet. Die Förderstrecke 6 ist aus mehreren Förderbändern ausgebildet, wobei zwei angrenzende Förderbänder jeweils eine Übergangsstelle 9 bilden, an welchen der zu transportierende Kies von einem Förderband auf ein anderes Förderband fällt.

Die Siebeinrichtung 5, der Aufgabetrichter 7 und die Übergangsstelle 9 der Förderbandstrecke 6 bilden starke Staubquellen. In Kiesgruben und Steinbrüchen sind alle Orte, an welchen Kies oder Steine bewegt und geschüttet werden, potentiell intensive Staubquellen. Weitere Staubquellen sind zum Beispiel Steinbrecher, Silos und mit Förderbändern aufgeschüttete Kies- oder Steinhaufen sowie Manipulationsflächen.

Weiterhin wird Staub durch Fahrzeuge, die entlang der Rampe 3 und dem Fahrweg 2 fahren, aufgewirbelt.

Ob ein bestimmter Bereich als Staubquelle zu bewerten ist, an dem der Staub gebunden werden muss, hängt auch davon ab, welche Anforderungen an die Staubreinheit in der angrenzenden Nachbarschaft bestehen. Bei dem in Figur 1 dargestellten Kieswerk befinden sich landwirtschaftliche Flächen, wie zum Beispiel Wiesen oder Felder, angrenzend an dem in Figur 1 unteren Rand und rechten Rand des Kieswerkes. Derartige landwirtschaftliche Flächen stellen hohe Anforderungen an die Staubreinheit, denn mit Staub verunreinigtes Gras oder mit Staub verunreinigte Feldfrüchte sind in ihrer Qualität beeinträchtigt und mindern den Nutzen erheblich. Bei dem in Figur 1 dargestellten Kieswerk befinden sich angrenzend an den oberen und linken Rand Industrieflächen, welche nur wenig staubempfindlich sind.

Um diesen unterschiedlichen Anforderungen an die Staubbildung und Staubempfindlichkeit gerecht zu werden, umfasst die Staubbindevorrichtung 1 eine Benetzungseinrichtung 10 zum Benetzen des Fahrweges 2 und der Rampe 3 mit Bindemittel, mehrere lokale Nebelabschirmeinheiten 11 und zwei Nebelwände 12.

Die Nebelabschirmeinheiten 11 sind zum Abschirmen der lokalen Staubquellen in der Kiesgrube 4 vorgesehen. Die Nebelwände 12 befinden sich in Figur 1 am unteren und rechten Rand der Kiesgrube 4, um die Übertragung von Staub aus der Kiesgrube 4 zu den benachbarten Agrarflächen zu verhindern.

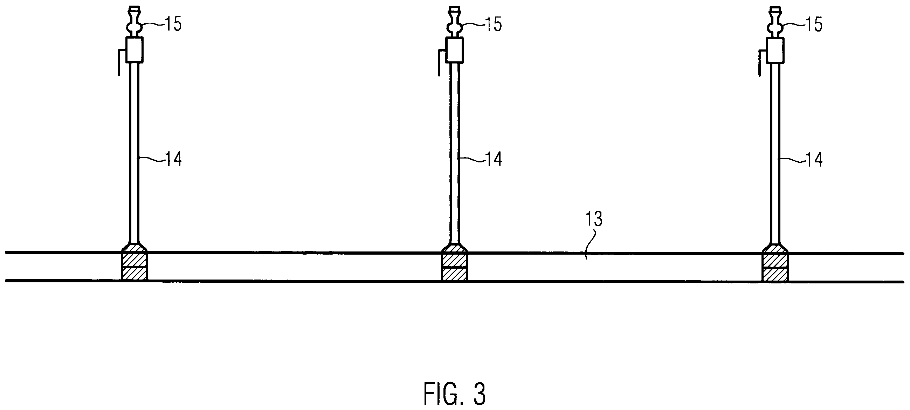

Die Benetzungseinrichtung 10 weist neben dem Fahrweg 2 auf beiden Seiten verlaufende Rohrabschnitte 13/1 und 13/2 auf. Diese Rohrabschnitte 13/1 und 13/2 sind steife, am Boden verlegte Rohre 13 (Figur 3), an welchen in regelmäßigen Abständen (z.B. alle 5 bis 10 m, vorzugsweise alle 6 bis 8 m) ein vertikal nach oben verlaufendes Standrohr 14 abzweigt. Die Standrohre 14 weisen jeweils eine Länge von 0,5 bis 2 m auf. An ihrem oberen, freien Ende befindet sich an jedem Standrohr 14 eine Zerstäubungsdüse 15. Am Standrohr 14 ist benachbart zur Zerstäubungsdüse 15 ein manuell betätigbares Absperrventil, insbesondere ein Kugelhahn, angeordnet, mit welchem die Wasserzufuhr zu jeder einzelnen Zerstäubungsdüse 15 separat ein- oder ausgeschaltet werden kann.

Vorzugsweise sind die Zerstäubungsdüsen 15 als Druckdüsen ausgebildet, welche erst ab einem vorbestimmten Öffnungsdruck selbstständig öffnen und unterhalb einem vorbestimmten Schließdruck selbstständig schließen. Hierdurch wird zum einen sichergestellt, dass Bindemittel nur dann austritt, wenn es mit einem zum Zerstäuben ausreichenden Druck an der Zerstäubungsdüse 15 anliegt. Weiterhin wird durch das selbstständige Schließen der Zerstäubungsdüsen 15 sichergestellt, dass sich das Standrohr 14 und der Rohrabschnitt 13 nicht entleeren, wenn die Benetzungseinrichtung 10 nicht in Betrieb ist. Hierdurch wird ein Wiederbefüllen der Rohrabschnitte 13 und der Standrohre 14 vermieden, wodurch einerseits die Gefahr von Druckschlägen erheblich vermindert werden kann und andererseits der Betrieb ohne nennenswerte Zeitverzögerung gestartet werden kann. Außerdem wird dadurch eine Ungleichmä-ßigkeit der Bindemittelausbringung, wie sie durch ein teilweises oder vollständiges Leerlaufen der Leitung erfolgen kann, verhindert. Die Zerstäubungsdüsen 15 sind derart ausgebildet, dass das Bindemittel mit einer Tröpfchengröße, die einem feinen Sprühregen entspricht, zerstäubt wird. Die Tröpfchengröße unterliegt einer bestimmten Verteilung, wobei die überwiegende Anzahl der Tröpfchen eine Tröpfchengröße von zumindest 100 µm, vorzugsweise zumindest 150 µm bzw. zumindest 200 µm aufweisen Sie erzeugen einen feinen Sprühregen, der gleichmäßig über einen vorbestimmten Bereich (Figur 1) halbkreisförmig oder kreisförmig oder kreissegmentartig (z.B. ein Kreissegment mit 90° oder 125° bzw.) oder eckig verteilt werden kann.

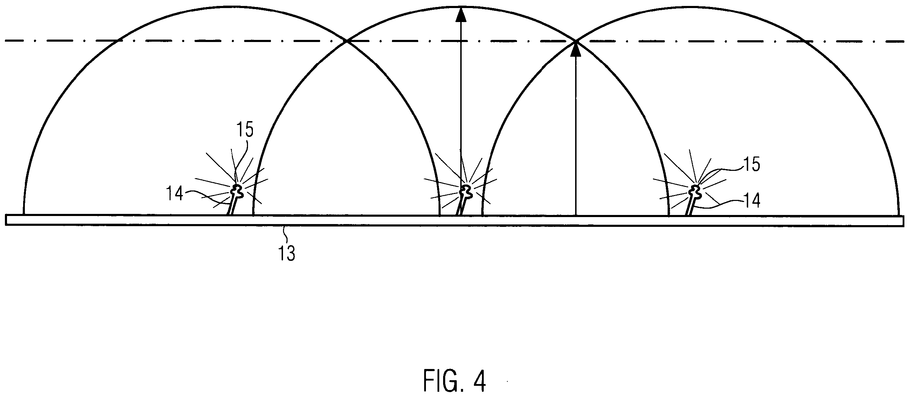

Der Anteil an beim Sprühen verdunstendem Bindemittel ist gering. Die Tröpfchen können von der Zerstäubungsdüse 15 bis in eine Entfernung von etwa 5 bis 12 m gesprüht werden. Die Zerstäubungsdüsen 15 sind mit einem halbkreisförmigen Sprühbild ausgebildet, und so angeordnet, dass sie mit diesem Sprühbild den benachbarten Fahrweg 2 abdecken (Figur 4). Zur Benetzung eines etwa 5 m breiten Streifens über eine Streckenlänge von 100 m werden etwa 2 bis 4 m³ Bindemittel pro Stunde ausgetragen. Der Betriebsdruck an der Düse beträgt hierbei etwa 2,5 bis 4,5 bar, um eine zuverlässige Ausbreitung des Sprühregens zu gewährleisten. In der Praxis hat sich gezeigt, dass ein Intervallbetrieb mit einer Sprühzeit von etwa 5 bis 15 Minuten und einer Pause von etwa 5 bis 30 Minuten, wobei die Pause zumindest so lange wie die Sprühzeit sein sollte, zu einer effizienten Benetzung führt. Die Pausenzeiten werden vorzugsweise automatisch den Witterungsverhältnissen angepasst. Je heißer und trockener die Umgebungsluft ist, bzw. je mehr Wind herrscht, desto kürzer sind die Pausen zu wählen.

Die Steuerung der Sprühzeit zur Benetzung eines Bodens kann auch in Abhängigkeit des Untergrundes erfolgen. Ein versiegelter Boden, wie z.B. ein Asphaltboden, kann keine nennenswerte Menge Bindemittel aufsaugen. Bei dem versiegelten Boden wird deshalb der Intervallbetrieb mit einer Sprühzeit von etwa 5 bis 15 Minuten und einer Pause von etwa 5 bis 30 Minuten ohne einer intensiven Vorbenetzung bevorzugt.

Ist der Boden hingegen nicht versiegelt, dann weist er in der Regel eine Porosität auf, welche Bindemittel speichern kann und die gespeicherte Menge an Bindemittel abgeben kann. Der Boden bildet dann ein Bindemittelreservoir ähnlich einem Schwamm. Bei dem nicht versiegelten Boden wird vorzugsweise zunächst eine intensive Vorbenetzung ausgeführt, welche zumindest 30 Minuten, vorzugsweise zumindest 45 Minuten und insbesondere zumindest 1 Stunde dauert, wobei Bindemittel mit einer Rate von 1 bis 3 l/m² abgegeben wird. Danach kann ein Intervallbetrieb mit kurzen Sprühzeiten von etwa 2,5 bis 10 Minuten mit einer Rate von 1 bis 3 l/m² und Pausen von etwa 5 bis 30 Minuten ausgeführt werden, um vom Boden abgegebenes Bindemittel wieder zu ersetzen.

Die Steuerung der Sprühzeiten wird vorzugsweise automatisch mittels einer zentralen Steuereinrichtung ausgeführt. Die zentrale Steuereinrichtung kann in Abhängigkeit von vorbestimmten Wetterparametern (Niederschlagsmenge, Temperatur, Windgeschwindigkeit, Luftfeuchtigkeit, Intensität der Sonnenstrahlung) selbsttätig die Sprühzeiten einstellen. Die Wetterparameter können mittels geeigneter Wettersensoren (Thermometer, Windmessgerät, Niederschlagsmessgerät) oder über das Internet erhältliche Wetterdaten versorgt werden.

Neben den oben genannten Wetterparametern kann auch die Bodenfeuchte gemessen und bei der Steuerung der Sprühzeit berücksichtigt werden. Die Berücksichtigung der Bodenfeuchte ist vor allem bei Staubbindevorrichtungen zweckmäßig, welche den Boden mit Bindemittel zur Vermeidung von Staub benetzen. Diese Staubbindevorrichtungen werden vor allem bei porösen Böden eingesetzt, auf welchen Staub aufgewirbelt werden kann. In Abhängigkeit von der Porosität haben diese Böden eine unterschiedliche Aufnahmekapazität zum Aufnehmen von Wasser. Dementsprechend sind die Schwellenwerte für die Bodenfeuchte empirisch zu bestimmen und einzustellen. Auch bei Nebel erzeugenden Staubbindevorrichtungen kann die Messung der Bodenfeuchte zweckmäßig sein. Hier wird vor allem mittels einer Messung der Bodenfeuchte festgestellt, ob zu viel Feuchteniederschlag auf den Boden gelangt und die Gefahr einer Pfützenbildung besteht.

Die oben angegebenen Wetterparameter und/oder die Bodenfeuchte werden vorzugsweise derart kombiniert, dass sie ein Maß für die Verdunstung sind. Je stärker die Verdunstung ist, desto länger werden dann automatisch die Sprühzeiten geregelt bzw. desto häufiger wird gesprüht. Die Verdunstungsrate kann beispielsweise durch die Kombination aus Luftfeuchtigkeit, Windgeschwindigkeit, Temperatur und Intensität der Sonnenstrahlung dargestellt werden. Die Regelung der Sprühzeiten erfolgt vorzugsweise derart, dass möglichst exakt die verdunstete Feuchte nachgeführt wird.

Eine solche Steuereinrichtung dient dazu, eine ausreichende Staubbindung sicherzustellen und andererseits den Bedarf an Bindemittel, insbesondere den Bedarf an Wasser, möglichst gering zu halten. Diese Steuereinrichtung ist hier für ein Ausführungsbeispiel zur Benetzung des Bodens mit Bindemittel dargestellt. Eine solche Steuereinrichtung kann gleichermaßen für eine Bindung des Staubes mittels künstlichen Nebels verwendet werden.

Die maximale Länge einer solchen Benetzungseinrichtung beträgt etwa 500 m. Sind längere Strecken zu benetzen, dann können mehrere derartige Benetzungseinrichtungen aufeinanderfolgend vorgesehen werden.

Entlang der Rampe 3 ist eine hängende Benetzungseinrichtung 10/2 vorgesehen. Die hängende Benetzungseinrichtung 10/2 umfasst ein dünnes Tragseil 16, das ein Stahlseil ist, eine Rohrleitung 17, Rohrleitungshaken 18, mit welchen die Rohrleitung 17 am Tragseil 16 eingehängt ist, flexible Zweigleitungen 19 und Zerstäubungsdüsen 20. Die Zerstäubungsdüsen 20 sind ähnlich wie die Zerstäubungsdüsen 15 ausgebildet. Sie besitzen jedoch ein vollkreisförmiges Sprühbild, so dass die Benetzungseinrichtung 10/2 mittig über der Rampe 3 positioniert werden kann und die Rampe vollständig oder zumindest fast vollständig mit dem Sprühbild abdeckt. Etwa alle 5 bis 7 m ist an der Rohrleitung 17 eine flexible Zweigleitung 19 mit einer Zerstäubungsdüse 20 angeordnet. Benachbart zur Zerstäubungsdüse 20 befindet sich an der flexiblen Zweigleitung 19 ein Stabilisator 52, der die Zweigleitung 19 umschließt und aufgrund seines Gewichtes dafür sorgt, dass die flexible Zweigleitung 19 nach unten hängt und zumindest mit ihrem unteren Abschnitt vertikal ausgerichtet ist. Hierdurch positioniert und justiert sich die flexible Zweigleitung 19 selbsttätig, selbst wenn die gesamte Benetzungseinrichtung 10/2 aufgrund äußerer Umstände, wie zum Beispiel Wind, bewegt wird. Die Zerstäubungsdüsen 20 sind vorzugsweise wieder als Druckdüsen ausgebildet, welche ab einem vorbestimmten Öffnungsdruck öffnen und ab einem vorbestimmten Schließdruck selbsttätig schließen. Der Öffnungsdruck liegt im Bereich von 1,5 bis 4 bar. Der Schließdruck ist jeweils etwas geringer. Die maximale Länge der Benetzungseinrichtung 10/2 beträgt etwa 500 m. Die Benetzungseinrichtung 10/2 wird vorzugsweise in Intervallen von 10 bis 15 Minuten betrieben mit Pausenzeiten von 10 bis 30 Minuten. Die Benetzungseinrichtung 10/2 wird vorzugsweise in einer Höhe von zumindest 5 bis 6 m über dem Boden angeordnet. Die Rohrleitung 17 ist vorzugsweise aus einem Kunststoffrohr, insbesondere Polyethylenrohr, ausgebildet. Sie hat einen Rohrinnendurchmesser von zum Beispiel 16 bis 40 mm.

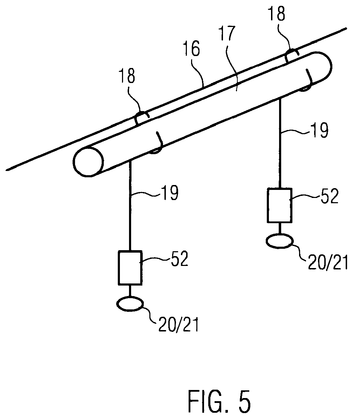

Die Nebelabschirmeinheiten 11 sind grundsätzlich genauso wie die hängende Benetzungseinrichtung 10/2 mit einem Tragseil 16, einer Rohrleitung 17, Rohrleitungshaken 18, flexiblen Zweigleitungen 19 und Zerstäubungsdüsen 21 ausgebildet (Fig. 5). Die Zerstäubungsdüsen 21 der Nebelabschirmeinheiten 11 unterscheiden sich von den Zerstäubungsdüsen 20 der Benetzungseinrichtung 10 dadurch, dass sie das Bindemittel wesentlich feiner versprühen, d.h., mit einer Tröpfchengröße von 30 bis 120 µm. Vorzugsweise beträgt die Tröpfchengröße 50 bis 100 µm, insbesondere 60 bis 90 µm. Derart feine Tröpfchen bilden einen Nebel, der sich allmählich am Boden absetzt. Solche feine Tröpfchen können nicht so weit versprüht werden, wie die grö-ßeren Tröpfchen der oben erläuterten Benetzungseinrichtung 10. Die maximale Reichweite beträgt hier etwa 1,5 m. Sie liegt in der Regel zwischen 0,8 und 1,3 m. Die Zerstäubungsdüsen 21 sind mit ihren flexiblen Zweigleitungen 19 in einem Abstand von 0,7 bis 1,5 m, insbesondere einem Abstand von 0,9 bis 1,2 m an der Rohrleitung 17 angeordnet. Zur Bereitstellung eines besonders dichten Nebels kann es auch zweckmäßig sein, zwei Nebelabschirmeinheiten 11 parallel nebeneinander anzuordnen, wobei die Rohrleitungen 17 in einem Abstand von 1 bis 2 m zueinander angeordnet sind. Die Düsen der beiden Nebelabschirmeinheiten 11 sind dann vorzugsweise in Längsrichtung versetzt zueinander angeordnet.

Die Rohrleitung 17 ist vorzugsweise aus einem flexiblen Kunststoff, wie z.B. Weich-Polyethylen, ausgebildet. In eine solche Rohrleitung 17 können Löcher gestochen werden, um die Zweigleitungen 19 anzuschließen. Dies kann auch nachträglich nach der gesamten Montage der Anlage erfolgen, wodurch es möglich ist, bei Bedarf auch lokal mehrere Zerstäubungsdüsen 20 an einer Leitung vorzusehen. Wenn lokal ein besonders dichter Nebel benötigt wird, kann der Abstand der Zerstäubungsdüsen auf 0,5 m oder 0,25 m oder sogar auf 0,1 m reduziert werden. Gleichermaßen ist es möglich, nachträglich Zerstäubungsdüsen 21 oder eine Zweigleitung 19 zusammen mit der entsprechenden Zerstäubungsdüse 21 zu entfernen und die entsprechende Öffnung mit einem Stöpsel zu verschließen. Hierdurch können nachträglich an der Anlage Änderungen vorgenommen werden. Dies ist insbesondere dann vorteilhaft, wenn sich aufgrund von geänderten Umständen ein anderer Bedarf an Nebel ergibt. Solche Änderungen sind immer möglich, wenn die Rohrleitung aus einem Kunststoff ausgebildet ist, in den entsprechende Löcher gestanzt bzw. gestochen werden können. Dies gilt gleichermaßen für ein hängendes wie auch für ein bodengebundenes System, bei welchem die entsprechende Rohrleitung am Boden verlegt ist.

Die Verwendung elastischer Kunststoffrohre als Rohrleitung 17 bewirkt noch folgende weiteren Vorteile:
- Aufgrund der Elastizität der Kunststoffrohre können Längenausdehnungen einfach aufgenommen werden. Daher können diese Vorrichtungen über lange Strecken von 500 m bis zu 5 km einfach installiert und betrieben werden. Bei Stahlrohren bestünde die Gefahr, dass aufgrund von Temperaturschwankungen längere Ausdehnungen auftreten, welche zu Undichtigkeiten an den Stoßstellen führen.
- Die Kunststoffrohre sind wetterunempfindlich. Bei Sturm geben sie elastisch nach und nehmen nach dem Sturm ihre Ausgangsstellung wieder ein.
- Bei einem hängenden System ist die Montage an dem Tragseil 16 aus Stahl sehr einfach durch Fixieren der Rohrleitung 17 mittels der Rohrleitungshaken 18. Zur dauerhaften Halterung der Rohrleitung 17 genügt ein Stahlseil mit einem Durchmesser von 5 bis 8 mm. Stützen zum Spannen des Stahlseiles können im Abstand von 50 bis 150 m vorgesehen werden, so dass große Bereiche überspannt werden können und die Stützen nicht einen darunter liegenden Betrieb stören.
- Die Vorrichtung kann variabel durch weitere Düsen ergänzt werden bzw. Düsen können im Nachhinein entfernt werden.

Der Betriebsdruck beträgt etwa 3 bis 6 bar. Je höher der Betriebsdruck ist, desto feiner sind die Tröpfchen und desto besser ist die Schwebefähigkeit des Nebels in Luft, womit jedoch auch eine stärkere Windanfälligkeit einhergeht. Auch hier ist es möglich, die oben genannten Druckdüsen mit vorbestimmten Öffnungs- und Schließdruck einzusetzen.

Eine solche Nebelabschirmeinheit 11 kann im Dauerbetrieb betrieben werden. Es kann jedoch auch zweckmäßig sein, eine solche Nebelabschirmeinheit mit sehr kurzen Pulsen von 1 Sekunde bis 120 Sekunden und entsprechend kurzen Pausen von 1 Sekunden bis 120 Sekunden zu betreiben, da durch die Schwebefähigkeit des Nebels auch bei einem solchen gepulsten Betrieb eine permanente Nebelwand bereitgestellt werden kann. Mit einem solchen gepulsten Betrieb kann der Verbrauch an Bindemittel erheblich reduziert werden, ohne dass die Fähigkeit des Staubbindens beeinträchtigt wird. Solch ein gepulster Betrieb ist vor allem an Orten vorteilhaft, an welchen keine oder nur sehr geringe Luftströmungen vorliegen.

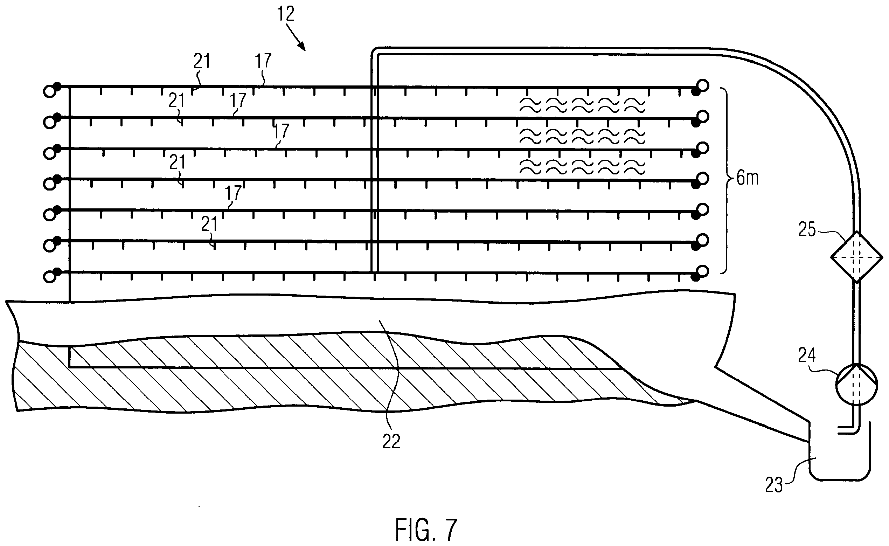

Die Nebelwände 12 sind genauso wie die Nebelabschirmeinheiten 11 ausgebildet, wobei sie jedoch eine oder mehrere parallel verlaufende Rohrleitungen umfassen, die sich über eine längere Strecke erstrecken und durchgehend in regelmäßigen Abständen mit Zerstäubungsdüsen 21 versehen sind. Die Rohrleitungen 17 können auch vertikal übereinander liegend angeordnet sein (Figur 7), so dass eine Nebelwand mit einer Höhe von einigen Metern ausgebildet wird. Bei dem in Figur 7 gezeigten Ausführungsbeispiel sind sieben Rohrleitungen 17 in jeweils einem Abstand von 1 m übereinander angeordnet, so dass sich eine Nebelwand mit einer Höhe von sieben Metern ausbildet.

Sowohl die Nebelabschirmeinheit 11 als auch die Nebelwand 12 wird bezüglich einer Staubquelle so angeordnet, dass der Nebel nicht an der Staubquelle, sondern ein Stück entfernt von der Staubquelle erzeugt wird. Am Entstehungsort des Staubes liegt in der Regel eine starke Luftströmung vor, die den Staub aufwirbelt. Ein Beaufschlagen einer solchen Staubentstehungsstelle mit Nebel würde nur dazu führen, dass der Nebel aufgrund der Luftströmung hiervon wieder wegbewegt wird und ein großer Anteil des Bindemittels ohne Wirkung bleiben würde. Deshalb wird der Nebel benachbart zur Staubentstehungsstelle an einem Ort angeordnet, an dem die Luft beruhigt ist. Hier kann der Staub wesentlich effizienter gebunden werden. Die Luftströmung ist vorzugsweise auf maximal 1 m/s, insbesondere 0,8 m/s beziehungsweise 0,7 m/s und vorzugsweise auf maximal 0,5 m/s begrenzt. Der Abstand des Bereiches, in dem sich der künstliche Nebel befindet, vom Entstehungsort des Staubes wird deshalb so gewählt, dass dieser Grenzwert eingehalten wird.

Die Nebelabschirmeinheiten 11 sind vorzugsweise so ausgebildet, dass sie die Staubquelle möglichst vollständig umschließen. Ist die Staubquelle bereits durch eine mechanische Wand abgeschirmt, dann kann es auch zweckmäßig sein, die Nebelabschirmung so auszubilden, dass sie mit ihren Enden bündig an dieser Wand endet und so zusammen mit der Wand die Staubquelle umschließt und insbesondere das Fortziehen des Staubes entlang der Wand und darüberhinaus verhindert. Die Nebelabschirmeinheit bildet somit einen Wandabschluss.

Die Nebelwand 12 weist vorzugsweise eine Rinne 22 zum Sammeln der Nebeltröpfchen auf. Das hierbei gesammelte Wasser wird zu einem Tank 23 geleitet, aus welchem es mittels einer Pumpe 24 wieder in die Rohrleitung 17 der Nebelwand gepumpt wird. Das Bindemittel wird somit im Kreislauf befördert. An einer Stelle dieses Kreislaufes ist ein Filter 25 vorgesehen, mit welchem die Staubpartikel aus dem Wasser entfernt werden. Alternativ kann das einmal eingesetzte Wasser natürlich auch verworfen werden, wobei dann kein Filter vorzusehen ist.

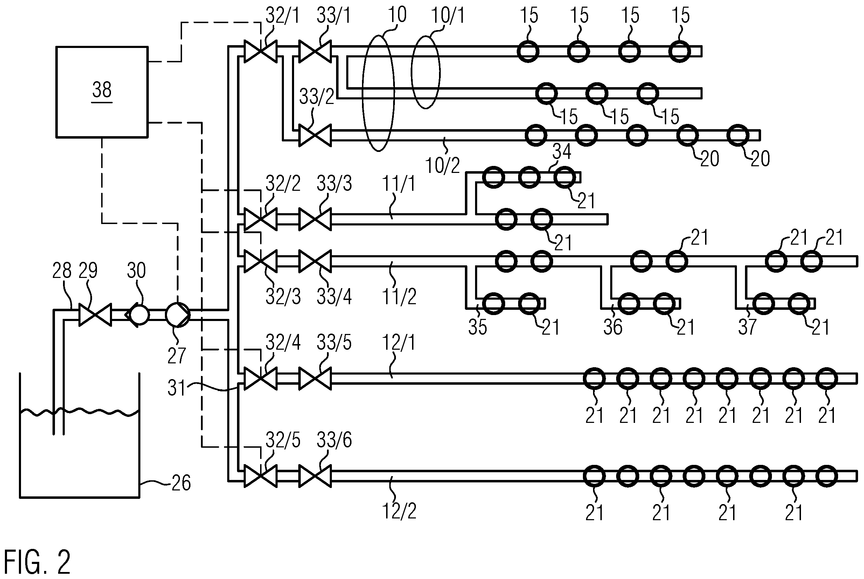

Die Staubbindevorrichtung 1 weist eine zentrale Bindemittelquelle 26 auf, welche zum Beispiel ein Brunnen sein kann (Fig. 2). Das Bindemittel ist vorzugsweise reines Wasser. Mittels einer Pumpe 27 wird das Wasser aus der Bindemittelquelle 26 abgezogen. In einem Leitungsabschnitt 28, der sich von der Bindemittelquelle 26 zur Pumpe 27 erstreckt, befindet sich ein manuelles Absperrventil 29 und ein Rückschlagventil 30, das bei einem Pumpenausfall ein Zurückströmen des Wassers in die Bindemittelquelle 26 verhindert. An der Abströmseite der Pumpe 27 führt eine Hauptleitung 31 zur Benetzungseinrichtung 10, zu den Nebelabschirmeinheiten 11/1 und 11/2 und zu den Nebelwänden 12/1 und 12/2. Von der Hauptleitung 31 zweigt jeweils ein Hauptstrang zur Benetzungseinrichtung 10, zu den Nebelabschirmeinheiten 11/1, 11/2 und zu den Nebelwänden 12/1 und 12/2 ab. An den Hauptsträngen sind jeweils Schaltventile 32/1 bis 32/5 angeordnet, welche von einer zentralen Steuereinrichtung 38 individuell betätigbar sind. Mit den Schaltventilen 32/1 bis 32/5 kann die Wasserzufuhr zu den einzelnen Hauptsträngen ein- und ausgeschaltet werden. Durch Betätigen des Schaltventils 32/1 kann der Intervallbetrieb mit einer Sprühzeit von etwa 5 bis 15 Minuten und einer Pause von etwa 5 bis 30 Minuten an der Benetzungseinrichtung 10 und durch Betätigen der Schaltventile 32/2 bis 32/5 können an den Nebelabschirmeinheiten 11/1 und 11/2 bzw. an den Nebelwänden 12/1 und 12/2 die kurzen Pulsen von 1 Sekunden bis 120 Sekunden mit entsprechend kurzen Pausen von 1 Sekunden bis 120 Sekunden ausgeführt werden.

Eine Benetzungseinrichtung 10 verzweigt den Hauptstrang in zwei Teilstränge für die liegende Benetzungseinrichtung 10/1 und die hängende Benetzungseinrichtung 10/2. In den beiden Zweigsträngen ist jeweils zu Beginn ein Druckminderer 33/1, 33/2 angeordnet, der den von der Pumpe 27 bereitgestellten Druck auf den Betriebsdruck der jeweiligen Benetzungseinrichtung 10/1 bzw. 10/2 reduziert. In den Hauptsträngen der Nebelabschirmeinheiten 11/1, 11/2 und der Nebelwände 12/1 und 12/2 ist auch jeweils ein Druckminderer 33 angeordnet, um auch hier den für die jeweiligen Zerstäubungsdüsen 21 geeigneten Betriebsdruck einzustellen. An Stelle der Druckminderer können auch weitere Pumpen vorgesehen sein, die dann vor allem für die Nebelabschirmeinheiten 11/1, 11/2 einen höheren Druck erzeugen, so dass der Betriebsdruck der Hauptpumpe 27 abgesenkt werden kann. Hierbei handelt es sich somit um eine weitere, dezentrale Bindemitteleinspeisung.

Die Benetzungseinrichtung 10 und die einzelnen Nebelabschirmeinheiten 11/1, 11/2 und die einzelnen Nebelwände 12/1 und 12/2 können unabhängig voneinander betrieben werden. Vom Hauptstrang der Nebelabschirmeinheit 11/1 zweigt ein Zweigstrang 34 ab, mit welchem die Siebeinrichtung 5 umschlossen wird. Die Zerstäubungsdüsen 21 sind hierbei mit einem vorbestimmten Abstand von 0,5 bis 1,5 m von der Siebeinrichtung 5, die eine starke Staubquelle bildet, angeordnet, so dass sich in diesem Abstand um die Staubquelle eine Nebelwand bildet. In entsprechender Weise sind weitere Zweigleitungen 35, 36, 37 an der zweiten Nebelabschirmeinheit 11/2 vorgesehen, um den Aufgabetrichter 7 und die Übergangsstellen 9 mit geeignetem Abstand zu umschließen.

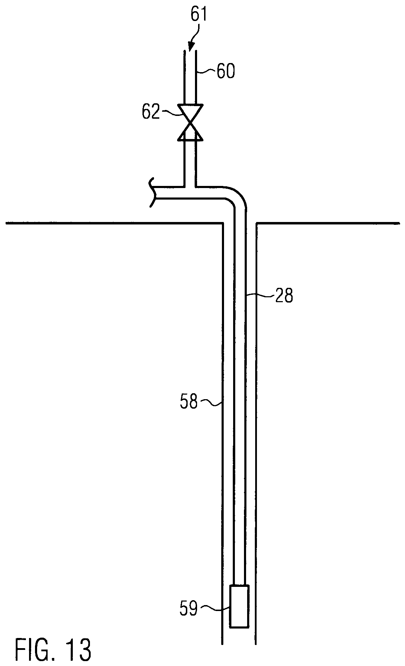

Der Leitungsabschnitt 28 kann auch als Brunnenleitung ausgebildet sein (Figur 13). Die Brunnenleitung 28 erstreckt sich durch eine vertikale Brunnenbohrung 58 tief in das Erdreich. Eine Tiefpumpe 59 ist anstelle der Pumpe 27 in der Brunnenbohrung 58 angeordnet und an die Brunnenleitung 28 gekoppelt, um aus der Brunnenbohrung 58 Wasser in die Staubbindevorrichtung 1 zu pumpen. Im oberirdischen Bereich des Leitungsabschnittes ist ein Zweigstrang 60 vorgesehen, welcher vom Leitungsabschnitt 28 abzweigt und eine Ablauföffnung 61 aufweist. Im Zweigstrang 60 befindet sich ein Steuerventil 62, das von einer zentralen Steuereinrichtung angesteuert werden kann.

Anstelle der vertikalen Brunnenbohrung 58 kann auch ein Schacht oder ein betonierter Tiefspeicher vorgesehen sein.

Beim Einschalten der Pumpe 59 wird das Steuerventil 62 über ein vorbestimmtes Zeitintervall allmählich geschlossen. Hierdurch wird im Leitungsabschnitt 28 durch die Pumpe 59 nicht schlagartig sondern allmählich ein Druck aufgebaut, da zunächst ein Teil des Wassers bzw. des Bindemittels in den Zweigstrang 60 durch das Steuerventil 62 aus der Ablauföffnung 61 austritt.

Beim Ausschalten der Pumpe wird das Steuerventil 62 allmählich geöffnet, wodurch der Druck im Leitungsabschnitt 28 allmählich verringert wird und einem Druckschlag entgegenwirkt. Das Öffnen eines Steuerventils erfolgt vorzugsweise kurz vor dem Ausschalten der Pumpe, so dass beim Ausschalten der Pumpe bereits ein verringerter Druck im Leitungsabschnitt 28 vorliegt, wodurch die Gefahr eines Druckschlages reduziert wird. Das Steuerventil 62 kann auch als selbsttätig öffnendes Drucksteuerventil ausgebildet sein, das ab einem vorbestimmten Öffnungsdruck öffnet. Dieser Öffnungsdruck ist größer als der Betriebsdruck. Bei einem schlagartigen Ausfall der Pumpe 59 wird im Leitungsabschnitt 28 eine Druckspitze erzeugt, welche über das selbsttätig öffnende Drucksteuerventil 62 abgeleitet wird. Durch Reflexionen können mehrere aufeinander folgende Druckspitzen auftreten, die nacheinander über den Zweigstrang 60 abgeleitet werden. Auch ist es möglich, dass dieses oder ein weiteres Ventil bei Pumpenausfall sofort schlagartig öffnet, um einerseits sofort druckbeaufschlagtes Bindemittel abzuleiten bzw. eine Ableitung für die folgende Druckspitze zu ermöglichen - es ist also bereits vor Auftreten der Druckspitze offen - somit muss auch keine Detektion dieser Druckspitze durch das Ventil erfolgen. Es ist auch möglich, dass dieses Ventil oder ein weiteres Ventil ein Einströmen von Luft oder anderen Medien ermöglicht, um so der Entwicklung eines Kavitationsschlages entgegenzuwirken.

Grundsätzlich ist es auch möglich, zwei separate Zweigstränge vorzusehen, wobei in einem Zweigstrang ein von der zentralen Steuereinrichtung ansteuerbares Steuerventil und im anderen Zweigstrang ein selbsttätig öffnendes Drucksteuerventil vorgesehen ist. Es kann auch lediglich ein einziger Zweigstrang vorgesehen sein, in dem das selbsttätig öffnende Drucksteuerventil angeordnet ist.

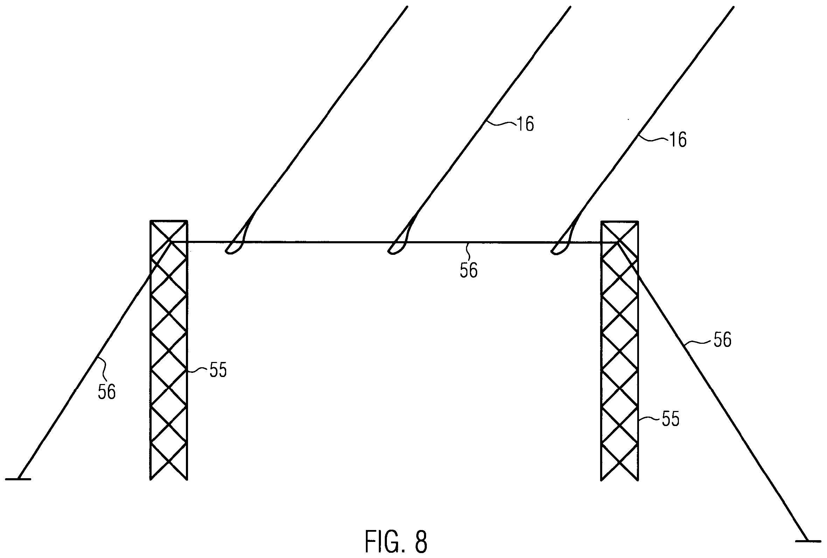

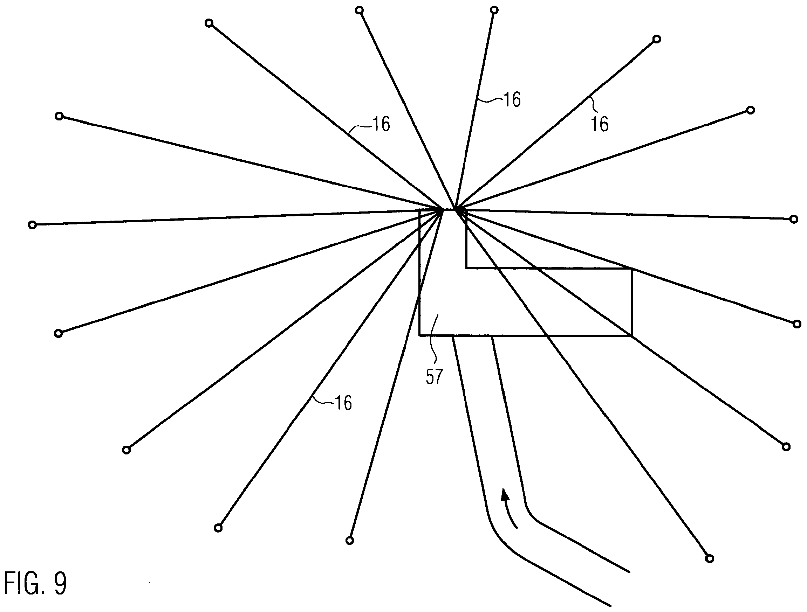

Figur 8 zeigt Masten mit Spannseilen 56 zum Fixieren der Tragseile 16. Die Tragseile können aber auch an einer beliebigen anderen Erhöhung, wie z.B. einem Gebäude 57 unmittelbar fixiert werden (Fig. 9).

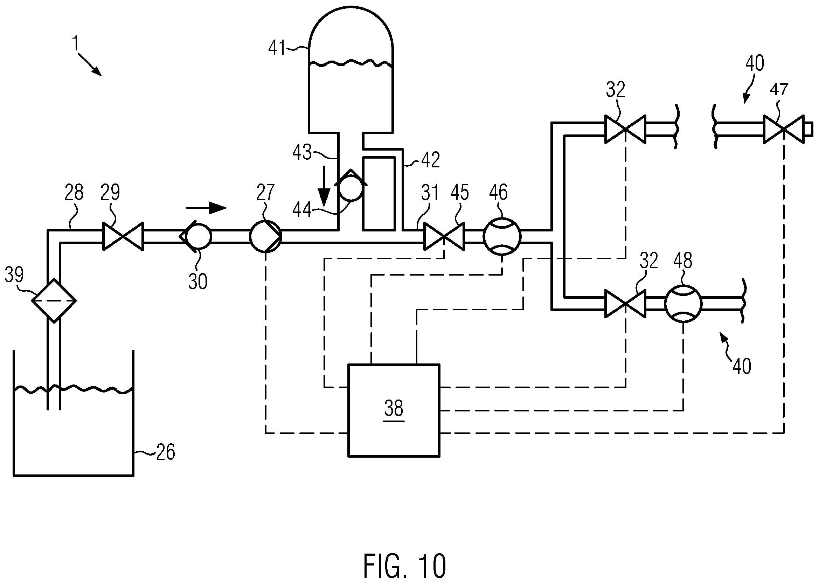

Figur 10 zeigt den Leitungsplan eines zweiten Ausführungsbeispiels der Staubbindevorrichtung 1. Gleiche Teile wie im ersten Ausführungsbeispiel sind mit gleichen Bezugszeichen bezeichnet und genauso ausgebildet, wie beim ersten Ausführungsbeispiel, weshalb eine genaue Beschreibung dieser Teile weggelassen werden kann.

Diese Staubbindevorrichtung 1 umfasst wiederum eine Bindemittelquelle 26 bzw. Bindemittelreservoir, eine Pumpe 27, welche über einen Leitungsabschnitt 28 aus der Bindemittelquelle 26 Bindemittel, insbesondere Wasser, fördert. Im Leitungsabschnitt 28 befindet sich ein manuelles Absperrventil 29 und ein Rückschlagventil 30. Weiterhin ist im Leitungsabschnitt 28 ein Filter 39 angeordnet. Der Filter kann mit einem Filtermedium versehen sein, das eine Porengröße von 130 µm aufweist. Es kann jedoch ein Filter ohne Filtermedium, wie zum Beispiel ein Zyklonfilter, vorgesehen sein.

Von der Pumpe 27 führt eine Hauptleitung 31 zu einer Benetzungseinrichtung und/oder zu einer Nebelabschirmeinheit bzw. einer Nebelwand. Diese Einrichtungen weisen jeweils zumindest einen Leitungsstrang mit einer oder mehreren Zerstäubungsdüsen auf. Deshalb werden diese Einrichtungen im Folgenden allgemein als Düsenstrang 40 bezeichnet. Das zweite Ausführungsbeispiel weist zwei solcher Düsenstränge 40 auf, welche jeweils mit einem Schaltventil 32 beginnen. An die zu den Düsensträngen 40 führende Leitung 31 ist ein Druckkessel mit Gaspolster 41 angeschlossen. Von der Leitung 31 zum Druckkessel mit Gaspolster 41 führt eine dünne Zuführleitung 42 und eine dicke Abführleitung 43. In der Abführleitung 43 befindet sich ein Rückschlagventil 44, das derart angeordnet ist, dass Wasser aus dem Druckkessel mit Gaspolster 41 nur in Richtung zur Leitung 31 durch die Abführleitung 43 fließen kann.

Wird der Druckkessel mit Gaspolster 41 mit Wasser gefüllt, dann fließt dieses Wasser ausschließlich durch die dünne Zuführleitung 42. Beim Entleeren des Druckkessels mit Gaspolster kann das Wasser sowohl durch die Abführleitung 43 als auch durch die Zuführleitung 42 in die Leitung 31 und von dort zu den Düsensträngen 40 fließen. Die Abführleitung 43 weist vorzugsweise einen zumindest doppelt und insbesondere viermal so großen Durchmesser wie die Zuführleitung 42 auf. Es ist jedoch auch möglich, dass die Zuführleitung 42 nur als Zuführleitung wirkt, wenn sie z.B. ein Drosselorgan enthält, das nur in eine Richtung durchgängig ist.

Durch das Vorsehen der dünnen Zuführleitung 42 und der dicken Abführleitung 43 kann das Entleeren des Druckkessels mit Gaspolster wesentlich schneller erfolgen als das Befüllen desselben.

In der Leitung 31 befindet sich ein Schaltventil 45, das von der zentralen Steuereinrichtung 38 angesteuert wird. Das Schaltventil ist in Flussrichtung nach dem Drucckessel mit Gaspolster 41 angeordnet. Das Schaltventil 45 weist mehrere Öffnungsstellungen auf, so dass mittels des Schaltventils 45 ein unterschiedlicher Öffnungsquerschnitt einstellbar ist. Der Öffnungsquerschnitt kann in mehreren Stufen oder auch stufenlos veränderbar sein.

Im Bereich zwischen dem Schaltventil 45 und den Düsensträngen 40 ist ein Volumenstrommessgerät 46 angeordnet, das mit der zentralen Steuereinrichtung 38 verbunden ist und dieser den jeweils aktuellen Volumenstrom übermittelt. Ein weiteres Volumenstrommessgerät 48 ist in zumindest einem der Düsenstränge 40 angeordnet.

Am Ende eines der Düsenstränge 40 ist ein Schaltventil 47, das von der zentralen Steuereinrichtung 38 angesteuert werden kann, zum Entleeren des Düsenstranges 40 vorgesehen.

Sofern im Folgenden nichts anderes ausgeführt wird, funktioniert diese Staubbindevorrichtung 1 des zweiten Ausführungsbeispiels genauso wie die des ersten Ausführungsbeispiels, indem mit der Pumpe 27 Wasser aus der Bindemittelquelle 26 angesaugt, den Düsensträngen 40 zugeführt wird und dort gesteuert durch die Schaltventile 32 über Zerstäubungsdüsen (nicht dargestellt in Figur 10) ausgegeben wird.

Das Schaltventil 47 am Ende eines der Düsenstränge 40 hat zwei Funktionen. Soll diese Staubbindevorrichtung 1 im Winter betrieben werden, dann kann bei Frostgefahr der Düsenstrang 40 geleert werden, indem das Schaltventil 47 geöffnet wird und Luft in den Schaltstrang 40 gefördert wird. Die Luft kann mittels einer Druckluftquelle oder einer geeigneten Pumpe bereitgestellt werden. Falls das Bindemittel bzw. das Wasser Verunreinigungen aufweist, dann sammeln sich diese in der Regel am Endbereich der Düsenstränge 40. Diese Verunreinigungen können ausgespült werden, indem das Schaltventil 47 geöffnet wird und der Düsenstrang 40 mit Wasser gespült wird.

Sowohl das Entleeren des Düsenstranges 40 als auch das Spülen des Düsenstranges 40 wird von der zentralen Steuereinrichtung 38 gesteuert.

Der Druckkessel mit Gaspolster 41 kann ein Membrankessel sein, der eine Membran aufweist, die den Membrankessel in einen Gasdruckraum und in einen Bindemittelraum unterteilt. Beim Füllen des Druckkessel mit Gaspolsters 41 wird das Gas im Gasdruckraum komprimiert, wodurch sich der Druck im Druckkessel mit Gaspolster 41 erhöht. Ist einer oder sind mehrere Düsenstränge 40 geleert, dann müssen sie wieder vollständig befüllt werden, bevor der Betrieb aufgenommen werden kann. Mit dem Druckkessel mit Gaspolster 41 kann ein großes Volumen an Bindemittel schnell zur Verfügung gestellt werden. Aufgrund des großen Querschnittes, der beim Abführen des Bindemittels aus dem Druckkessel mit Gaspolster durch die Abführleitung 43 und die Zuführleitung 42 zu Verfügung steht, kann das Bindemittel schnell, d.h., mit einem hohen Volumenstrom zu den Düsensträngen 40 gefördert werden. Ein schnelles Fördern von Bindemittel bzw. Wasser in die nicht vollständig gefüllten Düsenstränge birgt die Gefahr eines Druckschlages, der auftritt, wenn der jeweilige Düsenstrang vollständig gefüllt ist. Diesbezüglich ist die Verwendung des Druckkessels mit Gaspolster 41 vorteilhaft, da beim Abfördern des Bindemittels aus dem Druckkessel mit Gaspolster sich der Gasdruckraum ausweitet, wodurch der Druck im Druckkessel mit Gaspolster 41 abnimmt und sich mit zunehmender Abförderung aus dem Drucckessel verringert. Dies bedeutet, dass zu Beginn das Bindemittel aus dem Druckkessel 41 mit einem hohen Druck in Richtung zu den Düsensträngen 40 gefördert wird, wobei dieser Druck und damit die Strömungsgeschwindigkeit abnehmen. Hierdurch wird die Gefahr eines Druckstoßes etwas verringert. Zugleich wird zu Beginn der Förderung sehr schnell eine große Menge an Bindemittel aus dem Druckkessel mit Gaspolster 41 zu Verfügung gestellt, so dass geleerte Düsenstränge 40 schnell wiederbefüllt werden können.

Sind die Leitungen elastische Kunststoffleitungen, dann bilden auch diese Leitungen einen Bindemittelpuffer. Bei einem Betriebsstart wird dann zunächst aus dem Drucckessel der "Puffer" der Leitungen gefüllt, was einem Druckschlag bei einem schnellen Leitungsfüllen entgegenwirkt. Die Kombination aus einem Druckkessel mit Gaspolster und elastischen Kunststoffleitungen ist deshalb besonders vorteilhaft.

Im Betrieb treten Zustände sehr selten auf, in welchen der Druckkessel mit Gaspolster vollständig gefüllt bzw. vollständig geleert ist. Vielmehr wird der Druckkessel mit Gaspolster meistens teilweise gefüllt und teilweise entleert, so dass er im Betrieb Schwankungen des Bindemittelbedarfs schnell und zuverlässig ausgleichen kann, ohne dass die Gefahr von Druckschlägen besteht.

Mit dem Volumenmessgerät 46 wird der von der Pumpe 27 und dem Druckkessel mit Gaspolster 41 durch die Leitung 31 zugeführte Volumenstrom gemessen. Die Steuereinrichtung, die diesen Volumenstrom erfasst, kann anhand dieses Volumenstromes die Pumpleistung der Pumpe 27 und/oder den Öffnungsquerschnitt des Schaltventils 45 einstellen. Bei Überschreiten eines maximal zulässigen Volumenstroms kann die Pumpleistung der Pumpe 27 reduziert und/oder der Öffnungsquerschnitt des Schaltventils 45 vermindert werden, wodurch sowohl der Volumenstrom aus dem Druckkessel mit Gaspolster 41 als auch der durch die Pumpe 27 erzeugte Volumenstrom gesteuert werden können. Da der Druckkessel mit Gaspolster 41 in dem Bereich zwischen der Pumpe 27 und dem Schaltventil 45 an die Leitung 31 angeschlossen ist, können durch die Pumpleistung der Pumpe 27 und der Öffnungsstellung des Schaltventils 45 der Druck in diesem Leitungsabschnitt so gesteuert werden, dass Wasser in den Druckkessel mit Gaspolster 41 fließt, wenn der Druck in diesem Leitungsabschnitt größer als im Druckkessel mit Gaspolster 41 ist und Wasser aus dem Druckkessel mit Gaspolster 41 abgezogen wird, wenn der Druck in diesem Leitungsabschnitt kleiner als im Druckkessel mit Gaspolster 41 ist. Im Normalbetrieb stellt sich ein Gleichgewicht zwischen diesen beiden Drücken ein, so dass der Füllstand des Druckkessels mit Gaspolster 41 konstant bleibt. Dadurch, dass die Zuführleitung 42 einen kleinen Querschnitt aufweist, ist der Volumenstrom beim Befüllen des Druckkessels mit Gaspolster 41 entsprechend klein, so dass selbst bei einem wenig gefüllten Druckkessel mit Gaspolster 41 und bei noch nicht vollständig gefüllten Düsensträngen 40 es möglich ist, den Hauptteil des mit der Pumpe 27 geförderten Volumenstroms zu den Düsensträngen 40 zu leiten. Ist der Druckkessel mit Gaspolster 41 jedoch mit Bindemittel bzw. Wasser gefüllt, dann kann durch Öffnen des Schaltventils 45 den Düsensträngen 40 schnell eine große Menge Wasser zugeführt werden.

Vorzugsweise sind in den Düsensträngen 40 Füllstandssensoren (nicht dargestellt) angeordnet. Die Düsenstränge 40 können an ihren Endbereichen jeweils einen Füllstandssensor aufweisen. Sie können über ihre Länge verteilt, jedoch auch mehrere Füllstandssensoren aufweisen. Die Füllstandssensoren sind mit der zentralen Steuereinrichtung 38 verbunden, so dass die zentrale Steuereinrichtung 38 die Füllstände der Düsenstränge 40 erfassen kann. Die Füllstände können bei der Steuerung der Öffnungsstellung des Schaltventils 45 und der Pumpleistung der Pumpe 27 mit berücksichtigt werden und je voller die Düsenstränge mit Bindemittel gefüllt sind, desto stärker wird der Volumenstrom bzw. die Fließgeschwindigkeit reduziert.

Das in dem Düsenstrang 40 angeordnete Volumenstrommessgerät 48 dient zum Überwachen der Funktionstüchtigkeit dieses Düsenstranges. Weist dieser Düsenstrang beispielsweise ein Leck auf, dann erhöht sich der Volumenstrom in diesem Düsenstrang. Er wird durch das Volumenstrommessgerät 48 detektiert. Es kann eine Fehlermeldung ausgegeben werden und gleichzeitig kann dieser Düsenstrang mittels des entsprechenden Schaltventils 32 abgeschaltet werden. Ist hingegen eine oder sind mehrere Zerstäubungsdüsen verstopft, dann vermindert sich der entsprechende Volumenstrom. Auch dies kann mittels des Volumenstrommessgerätes 48 festgestellt werden und eine entsprechende Fehlermeldung kann ausgegeben werden. Auch können mit dem in einem der Düsenstränge 40 angeordneten Volumenstrommessgerät 48 zu hohe Volumenströme erkannt werden, welche eine Druckschlaggefahr verursachen können. Dann kann anhand dieses erfassten Volumenstromes in einem der Düsenstränge 40 der gesamte Volumenstrom, der mittels des Schaltventils 45 und der Pumpleistung der Pumpe 27 gesteuert wird, entsprechend verringert werden.

Vorzugsweise sind in allen Düsensträngen 40 solche Volumenstrommessgeräte 48 angeordnet, so dass alle Düsenstränge 40 einzeln überwacht werden können.

Weiterhin können mit den Volumenstrommessgeräten 46, 48 die Volumenströme in der Staubbindevorrichtung 1 erfasst und protokolliert werden. Hierdurch kann später nachvollzogen werden, ob die Staubbindevorrichtung 1 zu einem bestimmten Zeitpunkt korrekt in Betrieb war.

Die oben erläuterten Füllstandssensoren können auch als Druckschalter ausgebildet sein, die erst ab einem vorbestimmten Druck ein Signal ausgeben. Hierdurch wird nicht nur detektiert, ob die Düsenstränge 40 mit Bindemittel gefüllt sind, sondern auch, dass die Füllung am Ort der entsprechenden Druckschalter einen bestimmten Druck aufweist. Die Schaltschwelle dieser Druckschalter sollte etwas geringer als der Betriebsdruck der Zerstäubungsdüsen in den Düsensträngen 40 sein. Geeignete Schwellwerte der Druckschalter liegen vorzugsweise im Bereich von 1,5 bar bis 3 bar.

Bei langen Düsensträngen 40 kann es auch zweckmäßig sein, mit zunehmender Entfernung von der Bindemittelquelle 26 Zerstäubungsdüsen mit zunehmend geringem Betriebsdruck (Öffnungsdruck und Schließdruck) vorzusehen, da sich der Druck im Düsenstrang 40 mit zunehmender Entfernung verringern kann. Die einzelnen Zerstäubungsdüsen weisen somit mit zunehmender Entfernung von der Bindemittelquelle 26 einen geringen Öffnungs- bzw. Schließdruck auf. Die Druckschwelle der Druckschalter in der Nähe der entsprechenden Zerstäubungsdüsen ist entsprechend an den Öffnungs- bzw. Schließdruck dieser Zerstäubungsdüsen anzupassen.

Mittels Druckminderer, Querschnittsverengungen aufgrund einer Reduzierung des Leitungsquerschnittes, oder durch das Vorsehen entsprechender Engstellen können die Düsenstränge 40 auch gezielt in Druckzonen eingestellt werden. Die Druckzonen können bspw. mit reduziertem Druck mit zunehmender Entfernung von der Bindemittelquelle 26 ausgebildet sein, so dass in den einzelnen Druckzonen unterschiedliche, jedoch definierte Druckverhältnisse vorliegen. Durch eine solche Druckeinstellung, kann eine sehr hohe Ausbringungsgleichmäßigkeit erzielt werden. Der an den jeweiligen Düsen anliegende Druck kann auf Dauer auf einen definierten Wert gehalten werden, egal ob es sich um die erste, die letzte, oder irgendeine dazwischen liegende Düse einer Leitung handelt. Vorzugsweise sind die Düsen als Druckdüsen mit einem vorbestimmten Öffnungs- und/oder Schließdruck ausgebildet, wie sie oben erläutert sind.

Die zentrale Steuereinrichtung 38 kann derart ausgebildet sein, dass sie das Ein- und Ausschalten der Pumpe 27 verzögert. Dies ist insbesondere dann zweckmäßig, wenn die Pumpleistung der Pumpe 27 nicht graduell einstellbar ist. Ein- und Ausschalten der Pumpe 27 kann Kavitationsprobleme in der Pumpe oder ihr zuzuordnenden Komponenten verursachen und kann jeweils einen Druckstoß in den Leitungen erzeugen. Wird das Ausschalten um eine vorbestimmte Zeitdauer verzögert, dann kann es sein, dass sich die Betriebszustände in der Zwischenzeit wieder geändert haben, so dass die Pumpe 27 nicht mehr ausgeschaltet werden soll. Solche Situationen treten vor allem dann auf, wenn die Regelgrößen, wie Volumenstrom, Füllstand und/oder Druck in der Leitung 31 oder in den Düsensträngen 40 sich jeweils nahe an den entsprechenden Schwellwerten befinden und um diese pendeln. Die Staubbindevorrichtung 1 ist mit einer bestimmten Elastizität zum elastischen Puffern von Bindemittel ausgebildet, so dass selbst beim Erreichen der Schwellwerte es noch möglich ist, den Betrieb der Pumpe 27 fortzusetzen und ein gewisses Volumen weiter zu fördern oder aufgrund der vorhandenen Elastizität Bindemittel ohne eine Pumpleistung der Pumpe 27 für die Düsenstränge 40 bereitzustellen. Diese Elastizität wird beispielsweise durch den Druckkessel mit Gaspolster 41 bereitgestellt. Weiterhin kann eine solche Elastizität zum elastischen Puffern von Bindemittel durch Rohrleitungen aus einem elastischen Kunststoffmaterial, insbesondere aus Polyethylen, bereitgestellt werden, da dieses Material sich innerhalb bestimmter Kapazitäten dehnen und elastisch nachgebend Bindemittel aufnehmen kann. Durch eine solche Zeitverzögerung des Ein- und Ausschaltens der Pumpe 27 in Verbindung mit dem elastischen Puffern von Bindemittel kann die Lebensdauer der Pumpe 27 erheblich verlängert werden. Dies ist besonders vorteilhaft, wenn die oben beschriebene Nebelabschirmeinheit 11 bzw. die oben beschriebene Nebelwand 12 mit sehr kurzen Sprühpulsen betrieben werden. Diese Pulse können alleine durch Schalten der Schaltventile 32 gesteuert werden, wobei die Pumpe 27 kontinuierlich betrieben werden kann.

Beim vorliegenden Ausführungsbeispiel ist die Zeitverzögerung in der zentralen Steuereinrichtung 38 realisiert. Es ist selbstverständlich auch möglich, ein separates Zeitverzögerungsglied, insbesondere ein Zeitverzögerungsrelais, vorzusehen, das das Ein- und/oder Ausschalten der Pumpe 27 unabhängig von der zentralen Steuereinrichtung 38 zeitlich verzögert.

Weiterhin können in der Hauptleitung 31 und/oder in den Düsensträngen 40 jeweils ein oder mehrere Drucksensoren vorgesehen sein, die mit der zentralen Steuereinrichtung 38 verbunden sind. Die mit den Drucksensoren erfassten Druckwerte können in ähnlicher Weise wie die oben beschriebenen Volumenströme zur Steuerung des Volumenstroms in der Hauptleitung 31 mittels des Schaltventils 45 und der Pumpe 27 verwendet werden. Hierbei wird das Steuerventil 45 und die Pumpleistung der Pumpe 27 geschaltet bzw. verändert, wenn die gemessenen Druckwerte vorbestimmte Schwellenwerte über- und/oder unterschreiten. Weiterhin können vorbestimmte Sicherheitsschwellenwerte vorgesehen werden, die größer als die Schwellenwerte zum Steuern des normalen Betriebes sind. Erreichen die mit den Drucksensoren gemessenen Druckwerte die Sicherheitsschwellenwerte, dann wird dies von der zentralen Steuereinrichtung 38 als Sicherheitsproblem bewertet und die Pumpe 27 vollständig ausgeschaltet und/oder Sicherheitsventile (nicht dargestellt) in der Hauptleitung 31 und/oder in den Düsensträngen 40 geöffnet, um Bindemittel nach außen abzugeben, wodurch der Druck in der Staubbindevorrichtung 1 schnell vermindert werden kann und/oder Warnmeldungen ausgegeben werden

Bei dem oben erläuterten Ausführungsbeispiel (Figur 10) ist die Pumpe 27 zwischen dem Rückschlagventil 30 und dem Druckkessel 41 angeordnet. Im Rahmen der Erfindung kann die Pumpe 27 selbstverständlich auch unter Wasser in der Bindemittelquelle 26 angeordnet sein.

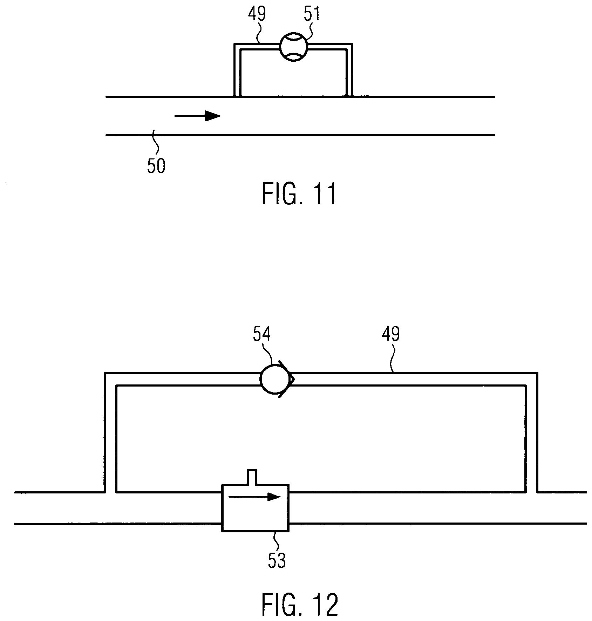

Volumenstrommessgeräte zum Messen von hohen Volumenströmen sind aufwändig und teuer. Es ist daher zweckmäßig, insbesondere in den Bereichen hoher Volumenströme, einen Nebenstrang 49 (Figur 11) zu einem Hauptstrang 50 vorzusehen, wobei der Nebenstrang eine Leitung mit kleinerem Querschnitt als die Leitung des Hauptstranges 50 ist und mit beiden Enden im Hauptstrang 50 mündet. Im Nebenstrang 49 wird das Volumenstrommessgerät 51 angeordnet, das den Volumenstrom durch den Nebenstrang 49 misst. Da die Volumenströme durch den Hauptstrang 50 und den Nebenstrang 49 in einem bestimmten Verhältnis, das dem Verhältnis des Querschnittes des Nebenstranges 49 zu dem Querschnitt des Hauptstranges 50 entspricht, kann aus dem im Nebenstrang 49 gemessenen Volumenstrom auf den gesamten Volumenstrom durch den Nebenstrang und den Hauptstrang geschlossen werden. Eine solche Anordnung des Volumenstromgerätes ist insbesondere in der Hauptleitung 31 vorteilhaft, da hier hohe Volumenströme vorliegen.

Um sicherzustellen, dass tatsächlich eine Strömung vorliegt, kann im Hauptstrang 50 eine zusätzliche Strömungsüberwachungseinrichtung vorgesehen sein, welche lediglich angibt, ob eine Strömung vorliegt oder ob keine Strömung vorliegt. Eine solche Strömungsüberwachungseinrichtung kann z.B. ein Prallscheiben-Durchflussmessgerät sein. Hiermit kann festgestellt werden, ob im Hauptstrang eine Strömung vorliegt, selbst wenn der Nebenstrang verstopft sein sollte.

Oben wurde erläutert, dass die Düsenstränge 40 mittels Druckminderer in separate Druckzonen unterteilt werden können. Solche Druckminderer 53 wirken in der Regel wie ein Rückschlagventil und lassen nur eine Strömung von der Seite mit höherem Druck zur Seite mit niedrigerem Druck zu. Entstehen jedoch kurzzeitige Druckspitzen, dann können sie in den Bereich mit niedrigerem Druck gelangen bzw. sie können beispielsweise durch Schaltvorgänge auch direkt im Niederdruckbereich entstehen und von dort nicht mehr entweichen, da Wasser nicht zurück durch den Druckminderer 53 fließen kann. Es kann daher sein, dass in Druckzonen wesentlich höhere Drücke vorliegen, als der in der jeweiligen Druckzone übliche Betriebsdruck. Dies kann zu Beschädigungen führen.

Sieht man zu der Leitung, in der sich der Druckminderer 53 befindet, einen Nebenstrang 49 vor, in dem ein Rückschlagventil 54 angeordnet ist, das eine Strömung von der druckreduzierten Seite des Druckminderers 53 zur Seite mit höherem Druck erlaubt, dann können solche Druckspitzen aus den Druckzonen entweichen (Figur 12).

Die zentrale Steuereinrichtung 38 kann mit Sensoren oder Online Wetterdiensten verbunden sein, die die aktuelle Witterung (Temperatur, Luftfeuchte, Niederschlagsmengen (prognostizierte und bereits gefallene), Windgeschwindigkeiten, Windrichtung, Luftfeuchtigkeit, Verdunstung) erfassen und dementsprechend das Austragen von Bindemittel steuern. Es kann auch zweckmäßig sein, dass die Steuereinrichtung 38 digitale Wetterinformationen erhält, um die Ausbringung des Bindemittels dementsprechend zu steuern. Es hat sich zum Beispiel gezeigt, dass es im Sommer am Ende einer kühlen Nacht bzw. am Morgen sinnvoll ist, mittels einer Benetzungseinrichtung den Boden zu benetzen, da bei kühler Luft wesentlich weniger zerstäubtes Wasser verdunstet als später am Tag, wenn es heißer ist. eine solche intensive Benetzung macht vor allem bei nicht versiegelten Böden Sinn. Zeigen die Wetterdaten jedoch an, dass nach einer trockenen Nacht bald mit Regen zu rechnen ist, dann ist eine intensive Benetzung kurz vor dem Regen überflüssig. Derartige Wetterinformationen sind heutzutage mit hoher Präzision verfügbar und können bei der Steuerung des Austragens des Bindemittels mit berücksichtigt werden. Hiermit kann auch die Anlagenleistung an die Witterung angepasst werden. Z.B. durch Verändern der Niederschlagsmenge mittels Änderung des Benetzungsintervalles oder auch durch das Zuschalten oder Wegschalten von einer oder mehreren Düsen bzw. Düsensträngen. Die ausgebrachte Menge an Bindemittel (je Zeiteinheit; entweder die pro Benetzungsdurchgang ausgebrachte oder die kumulierte Ausbringung je Tag) ist veränderbar und gezielt einstellbar.

Die Vorrichtung kann auch mit Sensoren versehen sein, welche Fahrzeuge und/oder Personen detektieren, so dass nach Maßgabe der Ausgangssignale dieser Sensoren Bereiche der Vorrichtung ein- bzw. ausgeschaltet werden. Befinden sich beispielsweise kurzzeitig Fahrzeuge oder Personen in einem zu besprühenden bzw. mit Nebel zu versehenden Bereich, so kann die Bindemittelzufuhr vorrübergehend lokal ausgeschaltet werden, so dass die Fahrzeuge bzw. die Personen nicht besprüht werden. Diese Sensoren können optische Sensoren, insbesondere Kameras sein, oder im Boden eingelassene Induktionsspulen zum Erkennen von Fahrzeugen. Das lokale Aus- oder Zuschalten von Bereichen kann bspw. bei einer Vorrichtung ausgeführt werden, bei welcher die Zerstäubungsdüsen und/oder bestimmte Rohrabschnitte mit schaltbaren Ventilen oder separaten Pumpen versehen sind.

Es können jedoch auch Sensoren vorgesehen sein, mit welchen die Feuchtigkeit des Bodens, ein Nebel und/oder eine Staubbildung detektiert werden. Diese Sensoren können Feuchtigkeitssensoren oder optische Sensoren, wie Kameras, sein. Entsprechende Kamerabilder können mit optischer Bildverarbeitung automatisch dahingehend analysiert werden, ob der Boden feucht ist, in der Atmosphäre sich ein Nebel befindet und/oder eine Staubwolke vorliegt. Diese optischen Sensoren können mit speziellen Beleuchtungsvorrichtungen kombiniert werden, welche entsprechende Staubpartikel gut erkennbar machen. In Abhängigkeit dieser Sensorsignale kann die Intensität der Staubbindung gesteuert werden, wobei auch lokal unterschiedliche Intensitäten der Staubbindung in Abhängigkeit der Sensorsignale eingestellt werden können.

Die Betriebszustände und/oder die Sensorsignale werden vorzugsweise protokoliert und archiviert. Hierdurch kann einerseits der Betrieb der Vorrichtung belegt werden, andererseits der Staubzustand dargestellt werden, wenn Sensoren vorliegen, welche den Staubzustand erfassen.

Anstelle einer automatischen Steuerung können auch Empfehlungsnachrichten an einen Operator an einer entsprechenden Ausgabeeinrichtung (Bildschirm, Lautsprecher) ausgegeben werden, so dass der Operator der Vorrichtung eine entsprechende Staubbindung auslösen kann.

Nachfolgend werden Niederschlagsraten anhand von Beispielen erfindungsgemäßer Staubbindevorrichtungen erläutert:
Eine Staubbindevorrichtung mit einer stehenden Anordnung von mehreren Zerstäubungsdüsen 15 gemäß Figur 3 ist zum Benetzen einer etwa streifenförmigen Fläche ausgebildet. Die Sprühkegel dieser Zerstäubungsdüsen 15 sind halbkreisförmig ausgebildet (Figur 4). Der Radius der Sprühkegel beträgt 6,4 m und der Betriebsdruck 3,5 bar. Eine einzelne Zerstäubungsdüse 15 besprüht eine Fläche von etwa 64 m² und verbraucht pro Stunde kontinuierlichem Betrieb ca. 190 Liter Bindemittel bzw. Wasser. Bei kontinuierlichem Betrieb wird der Boden mit etwa 3 Liter pro Quadratmeter je Stunde benetzt. Im gepulsten Betrieb kann der Verbrauch an Bindemittel pro Stunde bis auf ca. 50-70 Liter je Stunde und Düse verringert werden. Die Zerstäubungsdüsen 15 sind etwa in einem Abstand von 7 m voneinander angeordnet.

Eine weitere Ausführungsform der Zerstäubungsdüse 15, weist eine Wurfweite von 9 m bei einem Betriebsdruck von 3,5 bar auf. Ansonsten entspricht diese Ausführungsform der Zerstäubungsdüse, der oben erläuterten stehenden Anordnung von Zerstäubungsdüsen gemäß Figur 3 und 4 mit halbkreisförmigen Sprühkegeln. Die benetzte Fläche pro Düse beträgt etwa 130 m² und der Verbrauch an Bindemittel bzw. Wasser beträgt ca. 470 Liter pro Stunde pro Düse. Diese ergibt eine Niederschlagsrate von etwa 3,6 Liter/m² je Stunde im kontinuierlichen Betrieb.

Nachfolgend werden Laufzeitbeispiele für eine Staubbindevorrichtung gemäß den beiden oben erläuterten Ausführungsformen einer stehenden Anordnung von Zerstäubungsdüsen 15 (Figur 3 und 4) erläutert:
Auf versiegelten Böden, wie Asphalt oder Beton, wird der Boden bei kühler Witterung 5 bis 10 Minuten befeuchtet. Danach erfolgt eine Pause von einer bis mehreren Stunden. Bei warmer Witterung erfolgt die Befeuchtung für eine Dauer von 5 bis 20 Minuten, wobei dann die Pausenzeit eine halbe bis etwa 1 Stunde beträgt. Bei heißer Witterung (Lufttemperatur > 20°C) beträgt die Befeuchtungsdauer 5 bis 20 Minuten und die Pausenzeit wird auf 10 bis 20 Minuten reduziert.

Je stärker der Wind ist, desto länger werden die Befeuchtungszeiten und desto kürzer die Pausenzeiten eingestellt.

Versiegelte Böden können kaum Wasser speichern. Sie trocknen daher schnell ab und benötigen regelmäßige Befeuchtung, da ansonsten Drainagenwasser entsteht. Offene Naturböden wie Kies, Schotter, Sand können im Gegensatz zu versiegelten Böden Wasser speichern.

Bei kühler Witterung (Temperatur< 13°C) kann am Morgen eine Befeuchtung für 0,5 bis 1,5 Stunden ausgeführt werden, wobei dann am restlichen Tag keine weitere Befeuchtung mehr erfolgt. Bei warmer Witterung (13°C < Temperatur< 20°C) erfolgt am Morgen eine Befeuchtung von 0,5bis 1,5 Stunden, wobei dann weitere Befeuchtungen für die Dauer von etwa 10 bis 20 Minuten ausgeführt werden können, welche jeweils nach Pausen von 0,5 bis 4 Stunden erfolgen. Die Pausenzeit hängt vor allem von der Speicherkapazität des jeweiligen Bodens ab.

Bei heißer Witterung (Temperatur >20°C) erfolgt am Morgen eine Befeuchtung für eine Dauer von 1 bis 1,5 Stunden. Weitere Befeuchtungen für eine Dauer von 20 bis 45 Minuten werden mit Pausen von 30 bis 60 Minuten dazwischen ausgeführt. Bei sehr heißen und insbesondere windigen Tagen kann auch ein Dauerbetrieb zweckmäßig sein.

Die kontinuierliche Befeuchtung des Bodens kann zu einer spürbaren Absenkung der Umgebungstemperatur führen. Dies gilt insbesondere für sonnenbestrahlte Kiesgruben, welche windgeschützt liegen. Durch die Befeuchtung wird der Boden kühl gehalten, wodurch die vom Boden abgestrahlte Strahlungswärme erheblich reduziert wird.

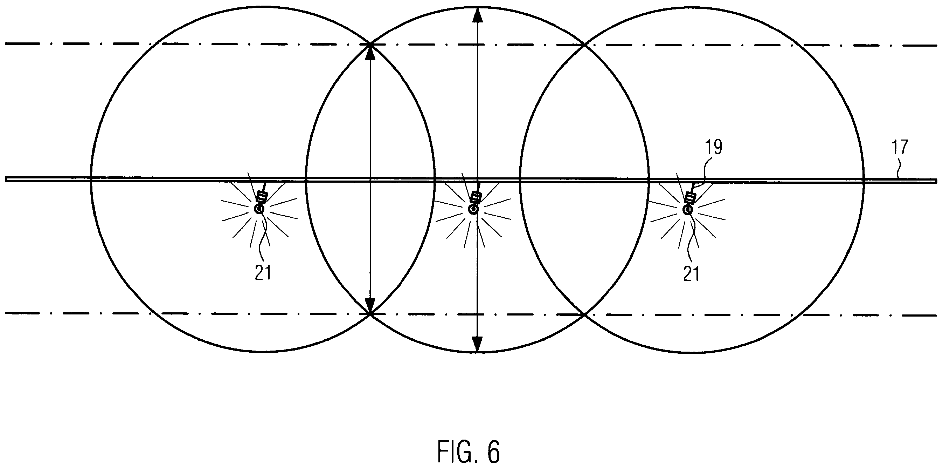

Nachfolgend werden Beispiele anhand von bodenbenetzenden Staubbindevorrichtungen mit hängenden Zerstäubungsdüsen 20 erläutert, wie sie in Figur 5 und 6 dargestellt sind.

Bei einer ersten Ausführungsform beträgt die Wurfweite 4 Meter und der Wurfkegel bildet einen Vollkreis. Der Betriebsdruck liegt im Bereich von 2 bis 3 bar. Die pro Zerstäubungsdüse 20 benetzte Fläche beträgt etwa 50 m² und der Verbrauch an Bindemittel beträgt ca. 70 Liter pro Stunde und pro Düse.

Dies ergibt eine Niederschlagsrate von etwa 1,4 Liter/m² im kontinuierlichen Betrieb.

Bei einer zweiten Ausführungsform beträgt die Wurfweite 4,8 m, wobei der Wurfkegel wieder einen Vollkreis bildet. Der Betriebszug liegt im Bereich von 1,5 bis 4,5 bar. Die benetzte Fläche beträgt etwa 72 m² und der Verbrauch beträgt ca. 70 Liter Bindemittel pro Stunde pro Zerstäubungsdüse. Dies ergibt eine Niederschlagsrate von etwa 0,97 Liter pro m² und h im kontinuierlichen Betrieb.

Nachfolgend werden typische Laufzeitbespiele für eine Staubbindevorrichtung mit solchen hängenden Düsen erläutert, wobei diese Laufzeitbeispiele für beide Düsenarten gelten:
Bei versiegelten Böden, wie Asphalt oder Beton wird bei kühler Witterung (Temperatur<13°C) der Boden zunächst für die Dauer von 10 bis 20 Minuten befeuchtet. Nach einer Pause von einer bis mehreren Stunden erfolgt eine erneute Befeuchtung. Bei warmer Witterung (13°C< Temperatur<20°C) erfolgt eine Befeuchtung für 10 bis 30 Minuten, wobei die Pausenzeit zwischen aufeinander folgenden Befeuchtungen etwa eine halbe bis eine ganze Stunde beträgt. Die weiteren Befeuchtungen werden wieder über eine Dauer von etwa 10 bis 30 Minuten ausgeführt.

Bei heißer Witterung (Temperatur >20°) wird der Boden jeweils für eine Dauer von 10 bis 30 Minuten befeuchtet. Die Pausenzeiten betragen in etwa 20 bis 30 Minuten. Je stärker der Wind ist, desto länger sind die Befeuchtungszeiten und desto kürzer werden die Pausenzeiten eingestellt.

Bei offenen Naturböden, wie Kies, Schotter oder Sand, erfolgt bei kühler Witterung (Temperatur<13°C) eine Befeuchtung für 1 bis 1,5 Stunden am Morgen. Den restlichen Tag wird keine weitere Befeuchtung durchgeführt. Bei warmer Witterung (13°C <Temperatur<20°C) erfolgt am Morgen wiederum eine Befeuchtung von 1 bis 1,5 Stunden. Nach Pausen von 0,5 bis 4 Stunden werden weitere Befeuchtungen für eine Dauer von 20 bis 40 Minuten ausgeführt. Bei heißer Witterung (Temperatur>20°C) erfolgt am Morgen eine Befeuchtung für 1 bis 1,5 Stunden und dann weitere Befeuchtungen für eine Dauer von 30 bis 40 Minuten. Die Pausen zwischen den einzelnen Befeuchtungen betragen 30 bis 60 Minuten.

Je stärker der Wind ist, desto länger werden die Befeuchtungszeiten eingestellt und desto kürzer sind die Pausen. Bei heißer Witterung und Wind kann es auch zweckmäßig sein, die Staubbindevorrichtung kontinuierlich zu betreiben.

Eine solche Staubbindevorrichtung mit hängenden Düsen kann beispielsweise aus einer Bindemittelleitung 17 mit einem Innendurchmesser von 28 mm ausgebildet sein, wobei in regelmäßigen Abständen (ca. 6 bis 7 Meter) Zweigleitungen 19 mit Zerstäubungsdüsen 20 angeordnet sind. Bei einem Abschnitt der Staubbindevorrichtung mit einer Länge von 350 m und 59 Zerstäubungsdüsen, wobei der Verbrauch 70 Liter Bindemittel pro Stunde pro Düse und der gesamte Verbrauch etwa 4,13 m³/h beträgt. Das Rohrvolumen beträgt 67 Liter. Dies entspricht 1,6 % des gesamten Verbrauches pro Stunde. Ein solch geringes Rohrvolumen kann nach einer Pause oder Stillstandzeit schnell aufgefüllt werden. Das Auffüllen kann mit einer herkömmlichen Standardpumpe erfolgen, ohne dass ein Druckkessel oder Druckventil, welches als Auslaufstopp dient, notwendig ist.

Bei einer Staubbindevorrichtung mit stehender Anordnung der Zerstäubungsdüsen kann bspw. ein Rohrabschnitt mit einem Innendurchmesser von 61,2 mm über eine Länge von 500 m vorgesehen sein. Das Rohrvolumen beträgt dann etwa 1470 Liter. Es sind 72 Zerstäubungsdüsen alle 7 m angeordnet, welche jeweils einen Verbrauch von 190 Liter Bindemittel je Stunde und je Düse aufweisen. Der gesamte Verbrauch beträgt daher etwa 13,7 m³/h. Das Rohrvolumen beträgt somit etwa 10 % des gesamten Verbrauches pro Stunde. Dies bedeutet, dass bei einer vollständigen Entleerung des Rohrvolumens es etwa 6 Minuten dauert, bis das Rohrvolumen mit Bindemittel wieder gefüllt ist, wenn das Bindemittel mit konstanter Rate gefördert wird. Das schnelle Auffüllen großer Volumen verursacht die Gefahr von Druckschlägen, wie es oben bereits erläutert ist. Bei einer solchen Staubbindevorrichtung ist es daher zweckmäßig einen Druckkessel mit Gaspolster vorzusehen, dessen Nutzvolumen etwa dem Rohrvolumen entspricht. Hier wäre somit ein Druckkessel mit einem Nutzvolumen von 1500 Liter zweckmäßig. Alternativ oder zusätzlich kann man eine spezielle Pumpe, insbesondere eine drehzahlgeregelte Pumpe oder eine Pumpe mit besonders hoher Leistung, vorsehen, um schnell das Bindemittel nachzufördern. Alternativ oder zusätzlich können auch selbstsperrende Drucksteuerventile bzw. Druckdüsen vorgesehen werden, welche ein Auslaufen verhindern bzw. verzögern.

Je länger die Staubbindevorrichtungen sind, desto größer ist in der Regel der Innendurchmesser des Rohrabschnittes 13. Bei einer Leitungslänge von beispielsweise 1,6 km ist es sinnvoll ein Rohr (Hart-PE) mit einem Innendurchmesser von 130,8 mm vorzusehen. Hierbei sind 189 Zerstäubungsdüsen (stehende Anordnung) etwa alle 8,5 m angeschlossen. Sie weisen jeweils einen Verbrauch von 470 Liter je Stunde und je Düse auf. Der gesamte Verbrauch beträgt etwa 88,8 m³/h. Das Rohrvolumen beträgt ca. 21 m³. Dies entspricht etwa 25 % des Verbrauches an Bindemittel pro Stunde. Bei konstanter Förderleistung würde das Wiederbefüllen eines vollständig entleerten Rohrvolumens ca. 15 Minuten dauern. Eine so lange Verzögerung ist grundsätzlich nicht akzeptabel. Daher ist es bei einem derart großen Rohrvolumen empfehlenswert, dass das Auslaufen bzw. Entleeren vermieden bzw. erheblich verzögert wird. Dies kann mittels selbstsperrenden Drucksteuerventilen bzw. Druckdüsen erzielt werden. Bei einer stehenden Düsenanordnung ist dies jedoch nicht notwendig, sofern die Staubbindevorrichtung etwa horizontal verläuft. Bei Staubbindevorrichtungen, die sich über einen Höhenunterschied erstecken, der größer als die Höhe der Standrohre 14 ist, ist es zweckmäßig an den tieferliegenden Zerstäubungsdüsen ein selbsttätig öffnenden Drucksteuerventil bzw. eine Druckdüse vorzusehen. Jedoch kann bei längeren Standzeiten ein teilweises Entleeren kaum vollständig vermieden werden. Daher ist es zweckmäßig in Rohrleitungen einer Staubbindevorrichtung mit einem derart großen Rohrvolumen Druckkessel mit Gaspolster und/oder Durchflussdrosselventile vorzusehen, damit beim Wiederbefüllen eine vorbestimmte maximale Geschwindigkeit nicht überschritten wird.

Es kann daher festgehalten werden, dass bei in Verhältnis zum regulären Verbrauch geringen Rohrvolumen (Rohrvolumen < 3 % des Bindemittelverbrauchs pro Stunde) keine gesonderten Maßnahmen für die Wiederbefüllung nötig sind, bei größeren Rohrvolumen hingegen geeignete Maßnahmen (z.B. Druckkessel; selbstsperrende Drucksteuerventile bzw Druckdüse; spezielle Pumpen) getroffen werden sollten. Bei großen Rohrvolumen (größer 15 % des regulären Bindemittelverbrauches pro Stunde bzw. insbesondere größer 20 % des regulären Bindemittelverbrauches pro Stunde) sollte das Auslaufen bzw. Entleeren der Rohrleitung vermieden bzw. erheblich verzögert werden. Geeignete Maßnehmen hierfür sind das Vorsehen von selbstsperrenden Drucksteuerventilen und Druckdüsen. Bei Staubbindevorrichtungen mit stehender Anordnung sind an sich selbstsperrende Drucksteuerventile und Druckdüsen nicht notwendig, wenn die Staubbindevorrichtung exakt in einer horizontalen Ebene angeordnet ist. Jedoch ist dies nur sehr selten der Fall, da sich die erfindungsgemäßen Staubbindevorrichtungen in der Regel über längere Strecken erstrecken. Die Verwendung selbstsperrende Drucksteuerventile und Druckdüsen ist jedoch auch deshalb vorteilhaft, da dann in der Bindemittelleitung immer druckbeaufschlagtes Bindemittel vorliegt und deshalb ein schnelles Anfahren nach einer Pause möglich ist.

Nachfolgend werden Beispiele anhand von Nebel erzeugenden Staubbindevorrichtungen mit hängenden Zerstäubungsdüsen 21 erläutert, wie sie in Figur 5 und 6 dargestellt sind.

Es gibt Einzelnebeldüsen und zu einer Vierergruppe kombinierte Einzeldüsen.

Die Nebelausstoßweite beträgt je Düse etwa 80 cm direkt an der Düse waagrecht gemessen. Bis der Nebel den Boden erreicht hat, hat sich der Nebel auf ca. 1,5 m ausgedehnt.

Die Einzeldüse verbraucht bei einem Betriebsdruck von 4 bar etwa 7,5 Liter Bindemittel je Stunde, das 4-fach Modell etwa 30 Liter je Stunde. Das ergibt bei einem gepulsten Betrieb einen Verbrauch von etwa 0,002 Liter je Sekunde bzw. von 0,008 Liter je Sekunde.

Eine solche Staubbindevorrichtung kann auch als Niederfluss-Staubbindevorrichtung ausgebildet sein. Dann verbraucht die Einzeldüse etwa 5,5 Liter Bindemittel je Std. und das 4-fach Modell etwa 22 Liter Bindemittel je Std. (0,0015 l/sec. bzw. 0,006 l/sec.).

Die Einzeldüsen werden in der Regel mit einem Abstand von etwa 10 cm in der Rohrleitung montiert, die 4-fach Düsen in einem Abstand von etwa 0,5 bis 2 Metern.

Da ein Teil des Nebels verdunstet, ist es schwierig eine Niederschlagsrate für eine Nebel erzeugende Staubbindevorrichtung zu bestimmen, da diese stark vom aktuellen Klima abhängt.

Nachfolgend werden Beispiele für Laufzeiten erläutert:
Fall 1: Staubbindung an einer Steinbrechermaschine

Wenn die Steinbrechermaschine steht ist die Staubbindung inaktiv. Bei Betrieb der Steinbrechermaschine wird kontinuierlich Nebel erzeugt.

Die Steinbrechermaschine ist an zwei Seiten mit einem Benebelungsstrang versehen, welcher jeweils eine Länge von 3 Meter aufweist, wobei der Benebelungsstrang 1,7 Meter von der Steinbrechermaschine entfernt angeordnet ist.

Der Düsenabstand beträgt 1 Meter, womit sechs Zerstäubungsdüsen vorgesehen sind. Der Betriebsdruck beträgt 5 bar. Der Wasserverbrauch beträgt je Stunde (6 x 34 =) 204 Liter/h im Dauerbetrieb.

### Fall 2: Hallenstaubbindung:

In einer Müllsortier-Halle sind an der Decke der Halle im Abstand von 2 Metern mehrere Staubbindeleitungen angebracht, welche alle 1,5 Meter Nebeldüsen (4-fach) montiert haben. Insgesamt sind 350 Staubbindedüsen vorhanden, welche bei einem Betriebsdruck von 5 bar einen Wasserverbrauch von 11.900 Litern je Stunde im Dauerbetrieb haben.

Alle 28 Sekunden wird ein Nebelpuls von 2 Sekunden Dauer erzeugt. Der Nebel tritt an der Hallendecke aus und fällt herab.

Jeder Puls verbraucht 6,6 Liter Bindemittel. Je Stunde ergibt sich somit ein effektiver Bindemittelverbrauch von rund 800 Litern. Das ist nur ein Fünfzehntel gegenüber einem Dauerbetrieb.

### Fall 3: Baufahrzeug

Ein stauberzeugendes Baufahrzeug produziert während seiner Betriebszeit durch Aufwirbeln von Bodenstaub fortwährend staubige Luft, die vom Boden aufsteigt und sich fortwälzt.

Seitlich des Baufahrzeuges sind an zwei Seiten Benebelungsdüsen in einem Abstand von 1,5 Metern über dem Boden angebracht. Insgesamt sind zehn Nebeldüsen mit einem stündlichen Verbrauch von 300 Litern bei einem Betriebsdruck von 4 bar angebracht.

Um im mobilen Betrieb Wasser zu sparen, wird die Nebelanlage gepulst betrieben. Es wird jeweils für 1 Sekunde Nebel ausgestoßen, dann wird jeweils für 4 Sekunden pausiert.

Jeder Nebelpuls führt zu einem Verbrauch von 0,08 Liter Bindemittel. Je Stunde ergibt sich im gepulsten Betrieb ein Bindemittelverbrauch von 60 Liter. Somit wird gegenüber durchgehendem Nebelbetrieb nur rund ein Fünftel an Bindemittel verbraucht.

### Bezugszeichenliste

- 1: Staubbindevorrichtung
- 2: Fahrweg
- 3: Rampe
- 4: Kiesgrube
- 5: Siebeinrichtung
- 6: Förderbandstrecke
- 7: Aufgabetrichter
- 8: Bearbeitungsgebäude
- 9: Übergangsstelle
- 10: Benetzungseinrichtung
- 11: Nebelabschirmeinheit
- 12: Nebelwand
- 13: Rohrabschnitt
- 14: Standrohr
- 15: Zerstäubungsdüse
- 16: Tragseil
- 17: Rohrleitung
- 18: Rohrleitungshaken
- 19: flexible Zweigleitung
- 20: Zerstäubungsdüse
- 21: Zerstäubungsdüse
- 22: Rinne
- 23: Tank
- 24: Pumpe
- 25: Filter
- 26: Bindemittelquelle
- 27: Pumpe
- 28: Leitungsabschnitt
- 29: Absperrventil
- 30: Rückschlagventil
- 31: Leitung
- 32: Schaltventil
- 33: Druckminderer
- 34: Zweigstrang
- 35: Zweigstrang
- 36: Zweigstrang
- 37: Zweigstrang
- 38: zentrale Steuereinrichtung
- 39: Filter
- 40: Düsenstrang
- 41: Druckkessel mit Gaspolster
- 42: Zuführleitung
- 43: Abführleitung
- 44: Rückschlagventil
- 45: Schaltventil
- 46: Volumenstrommessgerät
- 47: Schaltventil
- 48: Volumenstrommessgerät
- 49: Nebenstrang
- 50: Hauptstrang
- 51: Volumenstrommessgerät
- 52: Stabilisator
- 53: Druckminderer
- 54: Rückschlagventil
- 55: Mast
- 56: Spannseil
- 57: Gebäude
- 58: Brunnenbohrung
- 59: Tiefpumpe
- 60: Zweigstrang
- 61: Ablauföffnung
- 62: Steuerventil

## Patentansprüche

1. Vorrichtung zum Binden von Staub, umfassend
ein Bindemittelreservoir, welches unter Druck stehendes flüssiges Bindemittel zur Verfügung stellt,
eine Bindemittelleitung, welche mit dem Bindemittelreservoir verbunden ist, wobei
an die Bindemittelleitung zumindest eine Zerstäubungsdüse (20, 21) angeschlossen ist, welche in der Nähe zu einer Staubquelle anordbar ist, wobei die Bindemittelleitung (17) an einem Tragseil (16) aufgehängt ist und die Bindemittelleitung (17) elastisch ausgebildet ist, wobei die Bindemittelleitung (17) etwa parallel zum Tragseil (16) angeordnet und mit diesem an mehreren Stellen befestigt ist, und wobei
die Bindemittelleitung eine oder mehrere flexible Zweigleitungen (19) umfasst, welche von einem Hauptstrang (50) der Bindemittelleitung, der am Tragseil (16) befestigt ist, abzweigen, wobei an den Zweigleitungen (19) zumindest jeweils eine Zerstäubungsdüse (20, 21) angeordnet ist.

2. Vorrichtung nach Anspruch 1,
**dadurch gekennzeichnet,**
**dass** die Bindemittelleitung sich über eine Strecke von zumindest 100 m bzw. von zumindest 300 m erstreckt und entlang dieser Strecke mehrere Zerstäubungsdüsen (20, 21) an die Bindemittelleitung angeschlossen sind, und/oder dass die Vorrichtung derart ausgebildet ist, dass nicht mehr als 6 l/m²h Bindemittel während eines Sprühvorganges auf dem Boden ausgetragen werden.

3. Vorrichtung nach Anspruch 1 oder 2,
**dadurch gekennzeichnet,**
**dass** an den Zweigleitungen jeweils ein Zusatzgewicht vorgesehen ist, so dass sich die Zweigleitungen selbsttätig vertikal ausrichten.

4. Vorrichtung nach einem der Ansprüche 1 bis 3,
**dadurch gekennzeichnet,**
**dass** die Vorrichtung zum Binden von Staub in einer Höhe von zumindest 5 m über dem Boden angeordnet ist.

5. Vorrichtung nach einem der Ansprüche 1 bis 4,
**dadurch gekennzeichnet,**
**dass** die Zerstäubungsdüsen (20, 21) zum Absprühen des Bindemittels mit einem kreisförmigen oder kreissegmentförmigen Sprühkegel ausgebildet sind, wobei der maximale Abstand zwischen zwei benachbarten Zerstäubungsdüsen (20, 21) nicht größer als 80% des Durchmesser dieses Kreises ist.

6. Vorrichtung nach einem der Ansprüche 1 bis 5,
**dadurch gekennzeichnet,**
**dass** die Vorrichtung derart ausgebildet ist, dass nicht mehr als 3 l/m²h und vorzugsweise nicht mehr als 1,2 l/m²h Bindemittel während eines Sprühvorganges ausgetragen werden.

7. Vorrichtung nach einem der Ansprüche 1 bis 6,
**dadurch gekennzeichnet,**
**dass** die Zerstäubungsdüsen (20, 21) entlang der Bindemittelleitung mit einem Abstand von nicht mehr als 10 m, vorzugsweise nicht mehr als 8 m und insbesondere nicht mehr als 7 m angeordnet sind.

8. Vorrichtung nach einem der Ansprüche 1 bis 7,
**dadurch gekennzeichnet,**
**dass** das Bindemittelreservoir derart ausgebildet ist, dass es das Bindemittel mit einem maximalen Druck von 10 bar und vorzugsweise mit einem maximalen Druck von 5 bar bereitstellt, und/oder dass das Bindemittelreservoir derart ausgebildet ist, dass es das Bindemittel mit einem minimalen Druck von 2 bar und vorzugsweise mit einem minimalen Druck von 4 bar bereitstellt.

9. Vorrichtung nach einem der Ansprüche 1 bis 8,
**dadurch gekennzeichnet,**
**dass** die Zerstäubungsdüse(n) (20, 21) derart ausgebildet sind, dass das Bindemittel mit einer Tröpfchengröße von 30 bis 120 µm und vorzugsweise mit 50 bis 100 µm und insbesondere mit 60 bis 90 µm oder
mit einer Tröpfchengröße von zumindest 100 µm, vorzugsweise zumindest 150 µm bzw. zumindest 200 µm zerstäubt wird.

10. Vorrichtung nach einem der Ansprüche 1 bis 9,
**dadurch gekennzeichnet,**
**dass** die zumindest eine Zerstäubungsdüse (20, 21) eine Druckdüse ist, welche ab einem bestimmten Öffnungsruck des zugeführten Bindemittels selbständig öffnet, oder mit einem selbständig öffnenden Drucksteuerventil kombiniert ist, und die Vorrichtung eine Drucksteuerung aufweist, mit welcher der Druck in der Bindemittelleitung steuerbar ist und /oder
**dass** die Bindemittelleitung ein oder mehrere Druckminderer aufweisen, welche den Druck auf der Abströmseite des Druckminderers auf einen vorbestimmten Druckbereich regeln, wobei der oder die Druckminderer vorzugsweise benachbart zu einem Zerstäubungsventil angeordnet oder in ein Zerstäubungsventil integriert sind.

11. Vorrichtung nach Anspruch 10,
**dadurch gekennzeichnet,**
**dass** die Drucksteuerung ein Steuerventil aufweist, das in der Bindemittelleitung im Bereich zwischen dem Bindemittelreservoir und der zumindest einen Druckdüse angeordnet ist und von einer Steuereinrichtung (38) ansteuerbar ist.

12. Vorrichtung nach einem der Ansprüche 1 bis 11,
**dadurch gekennzeichnet,**
**dass** das Bindemittelreservoir zumindest einen Druckkessel mit Gaspolster (41) umfasst, der in einen Gasdruckraum und einen Bindemittelraum unterteilt ist.

13. Vorrichtung nach Anspruch 12,
**dadurch gekennzeichnet,**
**dass** der Druckkessel mit Gaspolster (41) eine Zuführleitung (42) zum Befüllen des Druckkessels mit Gaspolster (41) und eine Abführleitung (43) zum Entleeren des Druckkessels mit Gaspolster (41) aufweist, wobei die Zuführleitung (42) gegenüber der Abführleitung (43) einen Strömungswiderstand, wie z.B. eine Querschnittsverengung, aufweist, so dass das Befüllen des Druckkessels mit Gaspolster (41) mit einem geringeren Volumenstrom als das Entleeren des Drucckessels mit Gaspolster (41) erfolgt.

14. Verfahren zum Binden von Staub mit einem Bindemittel, wobei eine Vorrichtung nach einem der Ansprüche 1 bis 12 verwendet wird, und das Bindemittel in Intervallen mit Sprühphasen und Pausenphasen ausgetragen wird.

15. Verfahren nach Anspruch 14,
**dadurch gekennzeichnet**
**dass** zum Benetzen eines Bodens die Sprühphasen und die Pausenphasen zumindest 2 min. und vorzugsweise zumindest 5 min. und insbesondere zumindest 10 min. betragen, und/oder dass zum Erzeugen eines künstlichen Nebels die Dauer der Sprühphasen und der Pausenphasen im Bereich von 1 Sekunde bis 120 Sekunden und vorzugsweise im Bereich 1 Sekunde bis 30 Sekunden liegt.

## Claims

1. Device for binding dust, said device comprising
a binding agent reservoir which provides liquid binding agent that is under pressure,
a binding agent line which is connected to the binding agent reservoir, wherein
at least one spray nozzle (20, 21) is connected to the binding agent line, which spray nozzle may be located in the vicinity of a dust source, wherein the binding agent line (17) is suspended from a support cable (16) and the binding agent line (17) is of flexible design, wherein the binding agent line (17) is arranged roughly parallel to the support cable (16) and is fastened thereto at multiple points, and wherein
the binding agent line comprises one or multiple flexible branch lines (19), which branch off from a main run (50) of the binding agent line, which main run is fastened to the support cable (16), wherein at least one spray nozzle (20, 21) in each case is arranged on the branch lines (19).

2. Device according to Claim 1,
**characterized in that**
the binding agent line extends over a distance of at least 100 m or of at least 300 m and multiple spray nozzles (20, 21) are connected to the binding agent line along this distance, and/or that the device is designed in such a manner that no more than 6 l/m²hr binding agent are discharged onto the ground during a spraying operation.

3. Device according to Claim 1 or 2,
**characterized in that**
an additional weight is provided on the branch lines in each case, so that said branch lines are automatically vertically aligned.

4. Device according to one of Claims 1 to 3,
**characterized in that**
the device for binding dust is arranged at a height of at least 5 m above the ground.

5. Device according to one of Claims 1 to 4,
**characterized in that**
the spray nozzles (20, 21) for spraying out the binding agent are designed with a circular or circular segment-shaped spray cone, wherein the maximum distance between two adjacent spray nozzles (20, 21) is no greater than 80% of the diameter of this circle.

6. Device according to one of Claims 1 to 5,
**characterized in that**
the device is designed in such a manner that no more than 3 l/m²hr, and preferably no more than 1.2 l/m²hr, binding agent are discharged during a spraying operation.

7. Device according to one of Claims 1 to 6,
**characterized in that**
the spray nozzles (20, 21) are arranged along the binding agent line at intervals of no more than 10 m, preferably of no more than 8 m, and in particular of no more than 7 m.

8. Device according to one of Claims 1 to 7,
**characterized in that**
the binding agent reservoir is designed in such a manner that it supplies the binding agent at a maximum pressure of 10 bar, and preferably at a maximum pressure of 5 bar, and/or that the binding agent reservoir is designed in such a manner that it supplies the binding agent at a minimum pressure of 2 bar, and preferably at a minimum pressure of 4 bar.

9. Device according to one of Claims 1 to 8,
**characterized in that**
the spray nozzle(s) (20, 21) is/are designed in such a manner that the binding agent is sprayed with a droplet size of 30 to 120 µm, and preferably of 50 to 100 µm and, in particular, of 60 to 90 µm, or
with a droplet size of at least 100 µm, preferably of at least 150 µm, or of at least 200 µm.

10. Device according to one of Claims 1 to 9,
**characterized in that**
the at least one spray nozzle (20, 21) is a pressure nozzle which opens automatically from a certain opening pressure of the binding agent being supplied, or is combined using an automatically opening pressure control valve, and the device has a pressure control with which the pressure in the binding agent line can be controlled and/or
that the binding agent line has one or multiple pressure reducers, which regulate the pressure on the outflow side of the pressure reducer to a predetermined pressure range, wherein the pressure reducer, or pressure reducers, is/are preferably arranged adjacent to a spray valve or integrated in a spray valve.

11. Device according to Claim 10,
**characterized in that**
the pressure control has a control valve which is arranged in the binding agent line in the region between the binding agent reservoir and the at least one pressure nozzle and can be activated by a control unit (38).

12. Device according to one of Claims 1 to 11, **characterized in that**
the binding agent reservoir comprises at least one pressure vessel with gas cushion (41), which pressure vessel is divided into a gas pressure chamber and a binding agent chamber.

13. Device according to Claim 12,
**characterized in that**
the pressure vessel with gas cushion (41) has a supply line (42) for filling said pressure vessel with gas cushion (41) and a discharge line (43) for draining said pressure vessel with gas cushion (41), wherein the supply line (42) has a flow resistance compared with the discharge line (43), such as a cross-sectional constriction, for example, so that the filling of the pressure vessel with gas cushion (41) takes place with a lower volumetric flow than the draining of the pressure vessel with gas cushion (41).

14. Method for binding dust using a binding agent, wherein
a device according to one of Claims 1 to 12 is used and the binding agent is discharged at intervals with spraying phases and pause phases.

15. Method according to Claim 14,
**characterized in that**
for wetting the ground, the spraying phases and the pause phases are at least 2 min, and preferably at least 5 min, and, in particular, at least 10 min, and/or that in order to produce an artificial fog, the duration of the spraying phases and pause phases lies in the range of 1 second to 120 seconds, and preferably in the range of 1 second to 30 seconds.

## Revendications

1. Dispositif pour lier la poussière, comprenant
un réservoir de liant qui fournit un liant liquide sous pression,
une conduite de liant reliée au réservoir de liant, dans lequel
au moins une buse de pulvérisation (20, 21) est reliée à la conduite de liant, laquelle peut être disposée à proximité d'une source de poussière, la conduite de liant (17) étant suspendue à un câble porteur (16) et la conduite de liant (17) étant réalisée de manière élastique, la conduite de liant (17) étant disposée à peu près parallèlement au câble porteur (16) et étant fixée avec celui-ci en plusieurs points, et dans lequel
la conduite de liant comprend un ou plusieurs conduites de dérivation souples (19) qui partent d'un brin principal (50) de la conduite de liant qui est fixé au câble porteur (16), au moins une buse de pulvérisation (20, 21) étant disposée sur chacune des conduites de dérivation (19).

2. Dispositif selon la revendication 1,
**caractérisé en ce**
**que** la conduite de liant s'étend sur une distance d'au moins 100 m ou d'au moins 300 m et que plusieurs buses de pulvérisation (20, 21) sont reliées à la conduite de liant sur cette distance, et/ou **en ce que** le dispositif est conçu de telle sorte que pas plus de 6 l/m²h de liant ne sont évacués pendant une opération de pulvérisation sur le sol.

3. Dispositif selon la revendication 1 ou 2,
**caractérisé en ce**
**qu'**un poids supplémentaire est prévu sur chacune des conduites de dérivation, de sorte que les conduites de dérivation s'alignent automatiquement verticalement.

4. Dispositif selon l'une quelconque des revendications 1 à 3,
**caractérisé en ce**
**que** le dispositif pour lier la poussière est disposé à une hauteur d'au moins 5 m au-dessus du sol.

5. Dispositif selon l'une quelconque des revendications 1 à 4,
**caractérisé en ce**
**que** les buses de pulvérisation (20, 21) sont réalisées pour pulvériser le liant avec un cône de pulvérisation en forme de cercle ou de segment de cercle, la distance maximale entre deux buses de pulvérisation adjacentes (20, 21) n'étant pas supérieure à 80 % du diamètre de ce cercle.

6. Dispositif selon l'une quelconque des revendications 1 à 5,
**caractérisé en ce**
**que** le dispositif est conçu de telle sorte que pas plus de 3 l/m²h et de préférence pas plus de 1,2 l/m²h de liant sont évacués pendant une opération de pulvérisation.

7. Dispositif selon l'une quelconque des revendications 1 à 6,
**caractérisé en ce**
**que** les buses de pulvérisation (20, 21) sont disposées le long de la conduite de liant à une distance de pas plus de 10 m, de préférence pas plus de 8 m et en particulier pas plus de 7 m.

8. Dispositif selon l'une quelconque des revendications 1 à 7,
**caractérisé en ce**
**que** le réservoir de liant est conçu de manière à fournir au liant une pression maximale de 10 bar et de préférence une pression maximale de 5 bar, et/ou **en ce que** le réservoir de liant est conçu de manière à fournir au liant une pression minimale de 2 bar et de préférence une pression minimale de 4 bar.

9. Dispositif selon l'une quelconque des revendications 1 à 8,
**caractérisé en ce**
**que** la ou les buse(s) de pulvérisation (20, 21) sont conçues de telle sorte que le liant est atomisé avec une taille de gouttelettes de 30 à 120 µm et de préférence de 50 à 100 µm et en particulier de 60 à 90 µm ou
avec une taille de gouttelettes d'au moins 100 µm, de préférence d'au moins 150 µm ou d'au moins 200 µm.

10. Dispositif selon l'une quelconque des revendications 1 à 9,
**caractérisé en ce**
**que** l'au moins une buse de pulvérisation (20, 21) est une buse de pression qui s'ouvre automatiquement après une secousse d'ouverture spécifique du liant fourni, ou est combinée avec une soupape de régulation de pression à ouverture automatique, et le dispositif présente un régulateur de pression avec lequel la pression dans la conduite de liant peut être régulée et/ou
en ce que la conduite de liant présente un ou plusieurs réducteurs de pression, qui régulent la pression côté sortie du réducteur de pression dans une plage de pression prédéterminée, le ou les réducteurs de pression étant de préférence disposés à côté d'une vanne de pulvérisation ou étant intégrés dans une vanne de pulvérisation.

11. Dispositif selon la revendication 10,
**caractérisé en ce**
**que** le régulateur de pression présente une soupape de régulation qui est disposée dans la conduite de liant dans la zone située entre le réservoir de liant et l'au moins une buse de pression et qui peut être commandée par un dispositif de commande (38).

12. Dispositif selon l'une quelconque des revendications 1 à 11,
**caractérisé en ce**
**que** le réservoir de liant comprend au moins un récipient sous pression avec coussin de gaz (41), qui est divisé en un espace de pression de gaz et un espace de liant.

13. Dispositif selon la revendication 12,
**caractérisé en ce**
**que** le récipient sous pression avec coussin de gaz (41) présente une conduite d'alimentation (42) pour remplir le récipient sous pression avec coussin de gaz (41) et une conduite de décharge (43) pour vider le récipient sous pression avec coussin de gaz (41), la conduite d'alimentation (42) opposée à la conduite de décharge (43) présentant une résistance à l'écoulement, telle qu'un rétrécissement de section, de sorte que le remplissage du récipient sous pression avec coussin de gaz (41) s'effectue avec un débit volumique plus faible que la décharge du récipient sous pression avec coussin de gaz (41).

14. Procédé pour lier la poussière avec un liant, dans lequel
un dispositif selon l'une quelconque des revendications 1 à 12 est utilisé, et le liant est évacué par intervalles avec des phases de pulvérisation et des phases de pause.

15. Procédé selon la revendication 14,
**caractérisé en ce**
**que** pour mouiller un sol, les phases de pulvérisation et les phases de pause sont d'au moins 2 minutes et de préférence d'au moins 5 minutes et notamment d'au moins 10 minutes, et/ou **en ce que** pour générer un brouillard artificiel, la durée des phases de pulvérisation et des phases de pause est comprise entre 1 seconde et 120 secondes et de préférence entre 1 seconde et 30 secondes.
